(19) Europäisches Patentamt
European Patent Office
Office européen des brevets

(11) EP 4 800 183 A2

(12) # EUROPEAN PATENT APPLICATION

(43) Date of publication:
**02.09.2026 Bulletin 2026/36**

(21) Application number: **26191040.0**

(22) Date of filing: **25.03.2022**

(51) International Patent Classification (IPC):
***D21H 27/10*** *(2006.01)*

(52) Cooperative Patent Classification (CPC):
**B32B 7/06; B32B 7/12; B32B 27/10; B32B 29/002; D21H 19/08; D21H 19/82; D21H 19/824; D21H 21/16; D21H 27/10;** B32B 2255/10; B32B 2255/12; B32B 2255/20; B32B 2255/205; B32B 2255/28; B32B 2307/31; (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2021 JP 2021054219**

(62) Document number(s) of the earlier application(s) in accordance with Art. 76 EPC:
**22775837.2 / 4 316 803**

(71) Applicants:
- **Dai Nippon Printing Co., Ltd.**
  **Tokyo 162-8001 (JP)**
- **Reiko Co.,Ltd.**
  **Kyoto-shi, Kyoto 615-0801 (JP)**

(72) Inventors:
- **TAKAHASHI, Masahiro**
  **Tokyo, 162-8001 (JP)**
- **NISHIHIRA, Kenya**
  **Tokyo, 162-8001 (JP)**
- **TAZAWA, Hidetsugu**
  **Tokyo, 162-8001 (JP)**
- **SHIBATA, Takafumi**
  **Tokyo, 162-8001 (JP)**
- **MATSUMOTO, Chisayo**
  **Tokyo, 162-8001 (JP)**
- **IKUHARA, Shiro**
  **Ritto-shi, Shiga, 520-3045 (JP)**
- **KONDO, Toru**
  **Ritto-shi, Shiga, 520-3045 (JP)**
- **FUKUMOTO, Masaru**
  **Ritto-shi, Shiga, 520-3045 (JP)**

(74) Representative: **Müller-Boré & Partner Patentanwälte PartG mbB**
**Friedenheimer Brücke 21**
**80639 München (DE)**

Remarks:
This application was filed on 09-07-2026 as a divisional application to the application mentioned under INID code 62.

(54) **TRANSFER FILM AND LAYERED BODY WITH BARRIER PROPERTY**

(57) The present invention relates to a barrier laminate comprising: a substrate; an adhesive layer; an inorganic vapor deposition film; and a heat seal layer in this order in the thickness direction, wherein the substrate is a resin film, and wherein the inorganic vapor deposition film is in contact with the heat seal layer, or the barrier laminate further includes an anchor coat layer between the inorganic vapor deposition film and the heat seal layer, and the inorganic vapor deposition film is in contact with the anchor coat layer. Further, the present invention relates to a method for producing such a barrier laminate.

30
40
50
2

FIG. 1

EP 4 800 183 A2

(52) Cooperative Patent Classification (CPC): (Cont.)
B32B 2307/536; B32B 2307/7376; B32B 2439/70;
Y02W 30/80

## Description

### Technical Field

The present disclosure relates to a transfer film and a barrier laminate.

### Background Art

In recent years, environmental issues related to microplastics have been widely discussed. To reduce the environmental load of products made of paper, it is also required to improve the recyclability of the products by using only paper if possible.

Packaging materials with high gas barrier properties have been used as packaging materials for suppressing the deterioration in the quality of contents (for example, foods, medical supplies, chemical products, and cosmetics) due to water or oxygen. Attention has been given to a packaging material including a paper substrate, in which recycling use or disposal by incineration of the packaging material after use is considered. However, paper substrates generally have insufficient gas barrier properties. Thus, to enhance the gas barrier properties of a packaging material including a paper substrate, it has been studied to coat the paper substrate with a resin or to laminate a resin film having an inorganic vapor deposition film to the paper substrate.

Patent Literature 1 discloses a laminate in which a gas barrier thin film layer formed by plasma polymerization is laminated on a paper or pulp mold substrate that has, on a surface thereof, a filler layer formed of a polycondensate of a polysaccharide and a silicon compound. In Patent Literature 1, the paper or pulp mold substrate is placed in a plasma polymerization apparatus when the gas barrier thin film layer is formed, and a paper powder or a pulp powder generated from the paper or the pulp mold tends to suppress depressurization of the plasma polymerization apparatus to a pressure suitable for the plasma polymerization. This makes it difficult to form a thin film layer with stable gas barrier properties, tends to result in insufficient adhesion between the filler layer and the thin film layer, and tends to make the gas barrier properties unstable. Although Patent Literature 1 relates to a chemical vapor deposition method for forming a gas barrier thin film layer, a physical vapor deposition method also has the same problems.

### Citation List

#### Patent Literature

PTL 1: Japanese Patent No. 4622201

### Summary of Invention

#### Technical Problem

It is desired to provide not only a barrier laminate with high interlayer adhesiveness including a paper substrate but also a barrier laminate with high interlayer adhesiveness including a substrate on which direct vapor deposition is difficult to perform. Packaging materials usually include a heat seal layer for sealing the packaging materials. Thus, a barrier laminate, such as barrier paper, that is suitable for use in packaging material applications preferably includes a heat seal layer.

It is an object of the present disclosure to provide a barrier laminate including a substrate, an inorganic vapor deposition film, and a heat seal layer, wherein the barrier laminate has high interlayer adhesiveness and is less likely to cause delamination. It is another object of the present disclosure to provide a transfer film that can be suitably used to produce such a barrier laminate.

#### Solution to Problem

A transfer film according to the present disclosure includes a support substrate, a heat seal layer, and an inorganic vapor deposition film in this order in the thickness direction, wherein the inorganic vapor deposition film is in contact with the heat seal layer, or the transfer film further includes an anchor coat layer between the inorganic vapor deposition film and the heat seal layer, and the inorganic vapor deposition film is in contact with the anchor coat layer.

In one aspect, a barrier laminate according to the present disclosure includes a substrate, an adhesive layer, an inorganic vapor deposition film, and a heat seal layer in this order in the thickness direction, wherein the inorganic vapor deposition film is in contact with the heat seal layer, or the barrier laminate further includes an anchor coat layer between the inorganic vapor deposition film and the heat seal layer, and the inorganic vapor deposition film is in contact with the

anchor coat layer.

In one aspect, a barrier laminate according to the present disclosure includes a substrate, an adhesive layer, an inorganic vapor deposition film, and a heat seal layer in this order in the thickness direction, and no separation layer is present between the inorganic vapor deposition film and the heat seal layer.

Advantageous Effects of Invention

The present disclosure can provide a barrier laminate including a substrate, an inorganic vapor deposition film, and a heat seal layer, wherein the barrier laminate has high interlayer adhesiveness and is less likely to cause delamination. The present disclosure can provide a transfer film that can be suitably used to produce such a barrier laminate.

Brief Description of Drawings

[Fig. 1] Fig. 1 is a cross-sectional view of an example of a layer structure of a transfer film according to the present disclosure.

[Fig. 2] Fig. 2 is a cross-sectional view of an example of a layer structure of a transfer film according to the present disclosure.

[Fig. 3] Fig. 3 is a cross-sectional view of an example of a layer structure of a barrier laminate according to the present disclosure.

[Fig. 4] Fig. 4 is a cross-sectional view of an example of a layer structure of a barrier laminate according to the present disclosure.

[Fig. 5] Fig. 5 is a process drawing of an example of a method for producing a barrier paper according to the present disclosure.

[Fig. 6] Fig. 6 is an example of a graph of TOF-SIMS measurement before normalization.

Description of Embodiments

Embodiments of the present disclosure are described below with reference to the accompanying drawings and the like. The present disclosure can be implemented in many different forms and is not to be construed as limited to the description of the following embodiments.

In the drawings, to clarify the description, the width, thickness, angle, shape, and the like of each portion may be schematically represented in comparison with the actual form. However, the drawings are illustrative only and do not limit the interpretation of the present disclosure. In the present description and drawings, like reference numerals and letters denote like parts, and the detailed description thereof may be appropriately omitted. For convenience of description, the term "above" or "below" may be used in the description, but the vertical direction may be reversed. The same applies to the left-right direction.

In the following description, one or two or more of each component (for example, an additive agent, resin components, such as various resins, a colorant, and a curing agent) can be used.

[Transfer Film]

A transfer film according to the present disclosure includes a support substrate, a heat seal layer, and an inorganic vapor deposition film in this order in the thickness direction. The transfer film may further include an anchor coat layer between the heat seal layer and the inorganic vapor deposition film. The heat seal layer, the optional anchor coat layer, and the inorganic vapor deposition film constitute a transfer layer. In one embodiment, the transfer film and the transfer layer may further include a functional layer, such as a protective layer.

Thus, a transfer film according to the present disclosure includes a support substrate and a transfer layer provided on the support substrate, and the transfer layer includes a heat seal layer and an inorganic vapor deposition film in this order in the thickness direction. In one embodiment, the transfer layer may further include an anchor coat layer between the heat seal layer and the inorganic vapor deposition film. The heat seal layer is in contact with the support

substrate and is provided so as to be separable from the support substrate.

The inorganic vapor deposition film is in contact with the heat seal layer (or the anchor coat layer, if present) in the transfer layer, or the transfer layer does not include a separation layer between the inorganic vapor deposition film and the heat seal layer.

In one embodiment, the transfer film includes a protective layer on the inorganic vapor deposition film. In one embodiment, the transfer film includes a barrier coating layer on the inorganic vapor deposition film when the inorganic vapor deposition film is composed of a metal oxide, such as aluminum oxide or silicon oxide.

A support substrate as a transfer substrate, that is, a transfer film may be a sheet film or a continuous rolled film.

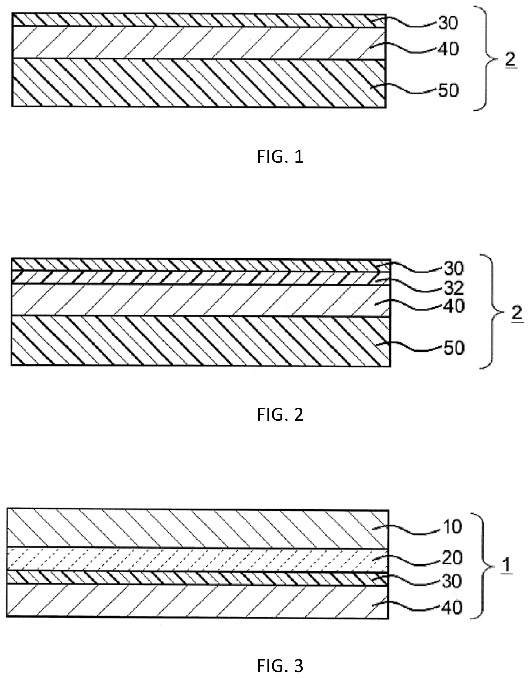

Fig. 1 illustrates one embodiment of a transfer film according to the present disclosure. A transfer film 2 in Fig. 1 includes a support substrate 50, a heat seal layer 40, and an inorganic vapor deposition film 30 in this order in the thickness direction.

Fig. 2 illustrates another embodiment of a transfer film according to the present disclosure. A transfer film 2 in Fig. 2 includes a support substrate 50, a heat seal layer 40, an anchor coat layer 32, and an inorganic vapor deposition film 30 in this order in the thickness direction.

<Support Substrate>

A transfer film according to the present disclosure includes a support substrate as a transfer substrate.

The support substrate is preferably a film made of a resin (hereinafter also referred to as a "resin film"). The resin is, for example, a polyester, such as poly(ethylene terephthalate) (PET) or poly(butylene terephthalate) (PBT); a nylon, particularly a polyamide, such as an aromatic polyamide, including nylon MXD 6; a vinyl resin, such as an ethylene-vinyl acetate copolymer, an ethylene-vinyl alcohol copolymer, or poly(vinyl alcohol); a polyolefin, such as polyethylene, polypropylene, polybutene, or cyclic polyolefin; a styrene resin, such as a styrene homopolymer, an acrylonitrile-styrene copolymer (AS resin), or an acrylonitrile-butadiene-styrene copolymer (ABS resin); or a (meth)acrylic resin, a polycarbonate, a polyimide, a diallyl phthalate resin, a silicone resin, a polysulfone resin, a poly(phenylene sulfide) resin, a poly(ether sulfone) resin, a polyurethane, a cellulose resin, or a fluoropolymer.

The resin film may be composed of a single layer or two or more layers with the same or different compositions. The resin film may be an unstretched film or a stretched film, such as a uniaxially stretched film or a biaxially stretched film.

The support substrate preferably has a thickness of 5 μm or more, more preferably 8 μm or more, still more preferably 10 μm or more, and preferably 200 μm or less, more preferably 100 μm or less, still more preferably 80 μm or less.

The support substrate preferably has a property that a heat seal layer can be formed on the substrate and that the substrate can be easily separated from the heat seal layer in a separation step. From such a perspective, among resin films, a polyester film and a polyamide film are preferred, a polyester film is more preferred, and a poly(ethylene terephthalate) film is still more preferred.

The support substrate preferably has good mechanical, physical, and chemical properties, particularly strength and heat resistance, that can withstand the step of forming an inorganic vapor deposition film. A poly(ethylene terephthalate) film is also preferred from such a perspective.

A surface of a resin film in contact with a heat seal layer is preferably not subjected to known adhesion promoting treatment, and a surface of a resin film in contact with a heat seal layer is preferably not provided with a known adhesion promoting layer. Such a structure can improve, for example, separability between the support substrate and a heat seal layer in the separation step.

<Heat Seal Layer>

A transfer film according to the present disclosure includes a heat seal layer. The heat seal layer functions as a heat sealable sealant layer, for example, when a barrier laminate, such as barrier paper, is used as a packaging material. The heat seal layer also functions as a separation layer from the support substrate when a barrier laminate, such as barrier paper, is produced by a transfer method described later.

The heat seal layer is a layer with heat sealability, more specifically, a layer that can be bonded by thermocompression bonding to an object to be bonded, or layers that can be fused by thermocompression bonding. A transfer film according to the present disclosure may also be used for applications in which heat sealing is not performed.

In a transfer film according to the present disclosure, the heat seal layer is preferably in contact with the support substrate. With such a structure, the support substrate can be easily separated from the heat seal layer. For example, the heat seal layer rarely remains on the support substrate after separation, and the support substrate can be easily recycled or reused.

The heat seal layer that can be separated from the support substrate can be formed using a thermoplastic resin, for example. The thermoplastic resin is, for example, an olefin polymer or a (meth)acrylic resin. Among these, an olefin

polymer is preferred.

In one embodiment, the heat seal layer contains an olefin polymer. With such a structure, the heat seal layer can have, for example, high heat sealability and separability, and a barrier laminate for a packaging material with sufficient rigidity, strength, and heat resistance and high recyclability can be produced.

The olefin polymer is, for example, an ethylene polymer or a propylene polymer. Among these, an ethylene polymer is preferred from the perspective of the balance between the heat sealability and the separability.

The ethylene polymer is, for example, a high-density polyethylene, a medium-density polyethylene, a low-density polyethylene, a linear low-density polyethylene, or a very-low-density polyethylene, preferably a low-density polyethylene, a linear low-density polyethylene, or a very-low-density polyethylene from the perspective of heat sealability. From the perspective of environmental load reduction, a biomass-derived polyethylene and/or a recycled polyethylene may be used.

A high-density polyethylene preferably has a density of more than 0.945 g/cm$^3$. The upper limit of the density of a high-density polyethylene is 0.965 g/cm$^3$, for example. A medium-density polyethylene preferably has a density of more than 0.925 g/cm$^3$ and 0.945 g/cm$^3$ or less. A low-density polyethylene preferably has a density of more than 0.900 g/cm$^3$ and 0.925 g/cm$^3$ or less. A linear low-density polyethylene preferably has a density of more than 0.900 g/cm$^3$ and 0.925 g/cm$^3$ or less. A very-low-density polyethylene preferably has a density of 0.900 g/cm$^3$ or less. The lower limit of the density of a very-low-density polyethylene is 0.860 g/cm$^3$, for example. The density of polyethylene is measured in accordance with JIS K 7112 (1999).

The ethylene polymer is also, for example, an ethylene-vinyl alcohol copolymer, an ethylene-vinyl acetate copolymer, a modified ethylene-vinyl acetate copolymer, an ethylene-maleic anhydride copolymer, an ethylene-(meth)acrylic acid copolymer, or an ethylene-(meth)acrylate copolymer, such as an ethylene-alkyl (meth)acrylate copolymer (for example, an ethylene-ethyl acrylate copolymer).

The propylene polymer is, for example, a propylene homopolymer, a propylene random copolymer, or a propylene block copolymer. The propylene homopolymer is a polymer of propylene alone. The propylene random copolymer is a random copolymer of propylene and an ethylenically unsaturated monomer other than propylene (for example, an $\alpha$-olefin, such as ethylene, 1-butene, or 4-methyl-1-pentene). The propylene block copolymer is a copolymer with a polymer block composed of propylene and a polymer block composed of an ethylenically unsaturated monomer other than propylene (for example, an $\alpha$-olefin, such as ethylene, 1-butene, or 4-methyl-1-pentene). From the perspective of environmental load reduction, a biomass-derived polypropylene and/or a recycled polypropylene may be used. The propylene polymer may also be a propylene-maleic anhydride copolymer.

As described later, a barrier laminate according to the present disclosure is preferably produced by a transfer method. In the transfer method, a heat seal layer is formed on a support substrate, an inorganic vapor deposition film is formed on the heat seal layer, and then the heat seal layer and the inorganic vapor deposition film are transferred onto a substrate, such as a paper substrate. Thus, the heat seal layer is preferably formed using a coating liquid that can form a coating film on the support substrate and that can form a coating film easily separable from the support substrate and having high heat sealability.

Such a heat seal layer is preferably formed using a coating liquid for the heat seal layer containing an ionomer of an olefin polymer. The ionomer is a generic name of synthetic resin in which a polymer is aggregated by utilizing the cohesive force of a metal ion.

The metal ion is, for example, an alkali metal ion or an alkaline-earth metal ion, more specifically, sodium, potassium, calcium, magnesium, or zinc.

The ionomer of the olefin polymer is, for example, a metal salt of an olefin-unsaturated carboxylic acid copolymer, a metal salt of an olefin-(meth)acrylic copolymer, a metal salt of an olefin-urethane copolymer, or a metal salt of an olefin-fluoropolymer copolymer.

The olefin is, for example, $\alpha$-olefin with 2 or more and 20 or less carbon atoms, such as ethylene, propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene. Among these, ethylene and propylene are preferred, and ethylene is more preferred.

The unsaturated carboxylic acid is, for example, an unsaturated monocarboxylic acid, such as (meth)acrylic acid, crotonic acid, or $\beta$-carboxyethyl (meth)acrylate; or an unsaturated dicarboxylic acid, such as maleic acid, itaconic acid, fumaric acid, or citraconic acid.

Among these ionomers, an ionomer of an ethylene polymer is preferred, a metal salt of an ethylene-(meth)acrylic acid copolymer, a metal salt of an ethylene-(meth)acrylic copolymer, a metal salt of an ethylene-urethane copolymer, or a metal salt of an ethylene-fluoropolymer copolymer is more preferred, and a metal salt of an ethylene-(meth)acrylic acid copolymer is still more preferred.

The olefin polymer content of a heat seal layer is preferably 80% by mass or more, more preferably 90% by mass or more, still more preferably 95% by mass or more. This can further improve the heat sealability of a barrier laminate.

The heat seal layer may contain a rubber material together with the thermoplastic resin. The rubber material is, for

example, thermoplastic rubber, natural rubber, butyl rubber, nitrile rubber, or chloroprene rubber. The rubber material can be used, for example, by mixing with the thermoplastic resin.

The heat seal layer is typically an unstretched layer. For example, the heat seal layer can be formed by applying a coating liquid for the heat seal layer containing an olefin polymer to a support substrate and drying the coating liquid, or by melt-extruding a resin composition containing an olefin polymer on a support substrate. For the reasons described above, the heat seal layer is preferably a cast coating layer formed using a coating liquid containing an olefin polymer.

A solvent for the coating liquid for the heat seal layer is, for example, water; an alcohol solvent, such as methanol, ethanol, 2-propanol, or 1-butanol; a ketone solvent, such as acetone, methyl ethyl ketone, methyl isobutyl ketone, or cyclohexanone; a glycol solvent, such as ethylene glycol monomethyl ether, ethylene glycol monoethyl ether, ethylene glycol monobutyl ether, propylene glycol monomethyl ether, ethylene glycol monoethyl ether acetate, or propylene glycol monomethyl ether acetate; an ester solvent, such as methyl acetate, ethyl acetate, or butyl acetate; a hydrocarbon solvent, such as n-hexane, cyclohexane, benzene, toluene, or xylene; a halogenated hydrocarbon solvent, such as methylene chloride or chloroform; an ether solvent, such as dioxolane or tetrahydrofuran; a nitrogen-containing solvent, such as acetonitrile or N,N-dimethylformamide; or a sulfur-containing solvent, such as dimethyl sulfoxide.

In the preparation of the coating liquid for the heat seal layer, an emulsion of an ionomer of an olefin polymer is preferably used, a self-emulsifying emulsion is more preferably used, and a self-emulsifying emulsion of a metal salt of an ethylene-(meth)acrylic acid copolymer is still more preferably used. Such a coating liquid can, for example, form a good coating film on a support substrate and form a coating film easily separable from the support substrate and having high heat sealability.

The emulsion is preferably an aqueous ionomer emulsion. With such an emulsion, the coating amount can be controlled to be relatively low, and a packaging material with a low environmental load can be produced without VOC emission.

The coating liquid for the heat seal layer may contain an additive agent. The additive agent is, for example, a viscosity modifier, an antifoaming agent, a surfactant, a leveling agent, a lubricant, an antioxidant, an ultraviolet absorber, a light stabilizer, a filler, a reinforcing agent, an antistatic agent, a pigment, and/or a dye.

The heat seal layer preferably has a thickness of 1 μm or more, more preferably 3 μm or more, and preferably 25 μm or less, more preferably 15 μm or less. In one embodiment, the heat seal layer has a thickness of 5 μm or more and 25 μm or less. The thickness of the heat seal layer is preferably appropriately changed with the strength of the heat seal layer, the processability of a transfer film, and the mass of the contents filled in a packaging material produced using a barrier laminate according to the present disclosure.

The indentation hardness of the heat seal layer is preferably 0.15 GPa or less, more preferably 0.10 GPa or less, still more preferably 0.08 GPa or less, and may have a lower limit of, for example, 0.01 GPa or 0.02 GPa. An indentation hardness of 0.15 GPa or less tends to result in, for example, a barrier laminate with further improved flexibility and gas barrier properties.

The composite modulus of the heat seal layer is preferably 2.0 GPa or less, more preferably 1.5 GPa or less, still more preferably 1.0 GPa or less, and may have a lower limit of, for example, 0.1 GPa or 0.2 GPa. A composite modulus of 2.0 GPa or less tends to result in, for example, a barrier laminate with further improved flexibility and gas barrier properties.

In the present disclosure, the indentation hardness and the composite modulus of a heat seal layer can be adjusted, for example, by appropriately selecting components contained in the heat seal layer.

In the present disclosure, the indentation hardness and the composite modulus of a heat seal layer are measured by a nanoindentation method. More specifically, the indentation hardness and the composite modulus are measured with a nanoindenter in a cross section of a heat seal layer of a transfer film as a measurement surface. The cross section is obtained by cutting in the thickness direction perpendicular to the main surface of the transfer film. An indenter is pushed into a portion near the central portion of the heat seal layer in the thickness direction in a portion where the cross section of the heat seal layer is exposed. The measurement conditions are described below. An indenter of the nanoindenter is a Berkovich indenter (a triangular pyramid indenter). An indenter is pushed into a heat seal layer in a cross section of the heat seal layer at an indentation depth of 100 nm over 10 seconds, is held in this state for 5 seconds, and is then unloaded over 10 seconds to determine the maximum load $P_{max}$, the projected contact area $A_p$ at the maximum depth, and a load-deflection curve. From the load-deflection curve, the indentation hardness is calculated using the formula $P_{max}/A_p$, and the composite modulus is calculated using the following formula (1).

[Math. 1]

$$E_r = \frac{S\sqrt{\pi}}{2\sqrt{A_p}} \quad \cdots \ (1)$$

In the formula (1), $A_p$ denotes the projected contact area, S denotes contact stiffness, and $E_r$ denotes the composite modulus of the heat seal layer.

The measurement is performed at room temperature (23°C). The measurement is performed at 10 or more points in a cross section, and the indentation hardness and the composite modulus are described as the arithmetic mean of reproducibly measured values at 10 points. Details of the measurement conditions are described in Examples.

<Anchor Coat Layer>

A transfer film according to the present disclosure may further include an anchor coat layer between the heat seal layer and the inorganic vapor deposition film. The anchor coat layer can enhance the adhesion between the heat seal layer and the inorganic vapor deposition film and reduce the occurrence of separation between these layers. The anchor coat layer is, for example, in contact with the inorganic vapor deposition film on one surface thereof and in contact with the heat seal layer on the other surface thereof.

In one embodiment, the anchor coat layer contains a resin component. The resin component is, for example, a thermoplastic resin, such as a polyolefin (for example, polyethylene or polypropylene), a vinyl resin, a styrene resin, a (meth)acrylic resin, a polyester, a polyurethane, or a polyamide; or a cured product of a thermosetting resin, such as a phenolic resin, a melamine resin, an epoxy resin, an alkyd resin, a thermosetting (meth)acrylic resin, an unsaturated polyester, or a thermosetting polyurethane. For a thermosetting resin, a curing agent, such as an amine compound, a phenolic compound, an isocyanate compound, or a carboxylic acid compound, is preferably used in combination. The resin component is preferably, for example, a polyester from the perspective of adhesiveness.

The polyester is, for example, a polymer synthesized by polycondensation between an acid component, such as a polycarboxylic acid, an ester thereof, or an acid anhydride thereof, and a polyhydric alcohol, a lactone ring-opening polymer, a polyhydroxycarboxylic acid polymer, a urea-modified polyester, or a urethane-modified polyester. The urethane-modified polyester is a polyester with a urethane bond.

The urethane-modified polyester is, for example, a resin in which two or more polyesters are bonded by a constitutional unit derived from a polyvalent isocyanate. Such a resin can be produced, for example, by a reaction between a terminal hydroxy group of a polyester and an isocyanate group of a polyvalent isocyanate.

The urethane-modified polyester may have a glass transition temperature (Tg) of 50°C or more, 60°C or more, or 70°C or more, and 120°C or less or 110°C or less. Tg is an intermediate glass transition temperature determined by differential scanning calorimetry (DSC) according to JIS K 7121.

The urethane-modified polyester may have a hydroxyl value of, for example, 1 mgKOH/g or more, 3 mgKOH/g or more, or 5 mgKOH/g or more, and 90 mgKOH/g or less or 70 mgKOH/g or less. The hydroxyl value is expressed by the number of mg of potassium hydroxide required to neutralize acetic acid bonded to a hydroxy group when 1 g of a sample is acetylated. The hydroxyl value is determined in accordance with JIS K 0070-1992.

The urethane-modified polyester may have a number-average molecular weight (Mn) of 500 or more or 1,000 or more, and 50,000 or less, 30,000 or less, or 10,000 or less. Mn is measured in accordance with JIS K 7252-1 by gel permeation chromatography (GPC) using polystyrene as a reference material.

The urethane-modified polyester is produced, for example, by a reaction between a polyester polyol and a polyvalent isocyanate. The urethane-modified polyester is produced, for example, by a reaction between a polyester polyol and a polyvalent isocyanate with an excess of hydroxy groups over isocyanate groups, and preferably has two or more hydroxy groups per molecule. Reaction conditions of a typical urethane reaction can be widely applied to the reaction between the polyester polyol and the polyvalent isocyanate.

The polyester polyol is a resin with two or more hydroxy groups per molecule produced by an esterification reaction between an acid component, such as a polycarboxylic acid, an ester thereof, or an acid anhydride thereof, and a polyhydric alcohol. The polyester polyol may be a polyester produced by a ring-opening reaction of caprolactone.

The polycarboxylic acid is, for example, an aliphatic polycarboxylic acid, such as malonic acid, succinic acid, glutaric acid, adipic acid, sebacic acid, azelaic acid, or dodecanedicarboxylic acid; an aromatic polycarboxylic acid, such as phthalic acid, isophthalic acid, terephthalic acid, trimellitic acid, or pyromellitic acid; or an aliphatic polycarboxylic acid, such as butane tricarboxylic acid, tricarballylic acid, or citric acid.

The polyhydric alcohol is, for example, a compound with two or more hydroxy groups per molecule and may be a

dihydric alcohol, such as aliphatic glycol, or a trihydric or higher polyhydric alcohol. The dihydric alcohol is, for example, ethylene glycol, diethylene glycol, 1,2-propanediol, 1,3-propanediol, 2-methyl-1,3-propanediol, 2,2-dimethyl-1,3-propanediol, 2,2-diethyl-1,3-propanediol, 1,2-butanediol, 1,3-butanediol, 1,4-butanediol, 1,5-pentanediol, 1,5-hexanediol, 1,6-hexanediol, 3-methyl-1,5-pentanediol, 2-ethyl-1,3-hexanediol, or 2,2,4-trimethyl-1,3-pentanediol. The trihydric or higher polyhydric alcohol is, for example, an aliphatic glycol, glycerin, trimethylolpropane, trimethylolethane, or pentaerythritol.

The polyvalent isocyanate is, for example, a compound with two or more isocyanate groups per molecule, more specifically, an aliphatic diisocyanate, such as hexamethylene diisocyanate, trimethylhexamethylene diisocyanate, lysine diisocyanate, or trimethylene diisocyanate; an alicyclic diisocyanate, such as isophorone diisocyanate, methylenebis(cyclohexyl isocyanate), or cyclohexane diisocyanate; or an aromatic diisocyanate, such as xylylene diisocyanate, tolylene diisocyanate, diphenylmethane diisocyanate, naphthalene diisocyanate, or biphenylene diisocyanate.

The urethane-modified polyester can also be produced by a simultaneous reaction between an acid component, such as a polycarboxylic acid, an ester thereof, or an acid anhydride thereof, a polyhydric alcohol, and a polyvalent isocyanate.

In one embodiment, the anchor coat layer may contain, as a resin component, a cured resin formed from a resin with a reactive functional group and a curing agent. The reactive functional group is, for example, a hydroxy group, a carboxy group, or an amino group. The resin with a reactive functional group is, for example, a urethane-modified polyester.

The curing agent is, for example, an isocyanate compound, such as an aromatic isocyanate compound or an aliphatic isocyanate compound. More specifically, the curing agent may be an aromatic isocyanate compound, such as tolylene diisocyanate (TDI isocyanate) or xylylene diisocyanate (XDI isocyanate); an aliphatic isocyanate compound, such as hexamethylene diisocyanate (HDI isocyanate) or isophorone diisocyanate (IPDI isocyanate); a modified material, a polyfunctionalized dimer, an adduct, an allophanate, a trimer, a carbodiimide adduct, or a biuret of these isocyanate compounds, a polymer thereof, or a polymer produced by adding a polyhydric alcohol thereto. The curing agent is preferably an aromatic isocyanate compound, more preferably xylylene diisocyanate (XDI), from the perspective of the adhesion between the heat seal layer and the inorganic vapor deposition film.

The amount of the curing agent to be used may be 10 parts by mass or more or 20 parts by mass or more and 200 parts by mass or less or 150 parts by mass or less per 100 parts by mass of the resin with the reactive functional group. This can further improve the adhesion between the heat seal layer and the inorganic vapor deposition film, for example.

The resin component content of the anchor coat layer may be 30% by mass or more, 50% by mass or more, 60% by mass or more, 80% by mass or more, 90% by mass or more, or 95% by mass or more. The resin component includes the cured resin.

The anchor coat layer may contain an additive agent. The additive agent is, for example, a lubricant, an antioxidant, an ultraviolet absorber, a light stabilizer, a filler, a reinforcing agent, an antistatic agent, a pigment, a dye, and/or a silane coupling agent.

The anchor coat layer may further contain a compound with a glucose ring. The compound with a glucose ring is, for example, a polysaccharide, such as cellulose or pullulan, or a derivative thereof. The derivative is, for example, a methylated product, a nitrated product, an acetylated product, a carboxymethylated product, or a cyanoethylated product. More specifically, the derivative may be cellulose acetate butyrate, cellulose acetate, or methylcellulose; or a compound with a nitro group and a glucose ring, such as nitrocellulose.

The addition of a compound with a glucose ring to the anchor coat layer can further improve the adhesiveness, for example. The addition of a compound with a glucose ring to the anchor coat layer can improve the heat resistance of the anchor coat layer and can suppress the degradation of the anchor coat layer due to heat at the time of forming an inorganic vapor deposition film on the anchor coat layer, and the inorganic vapor deposition film thus formed can easily exhibit desired gas barrier properties.

The content of the compound with a glucose ring in the anchor coat layer may be 5 parts by mass or more, 10 parts by mass or more, or 20 parts by mass or more, and 200 parts by mass or less or 100 parts by mass or less, per 100 parts by mass of the resin component. 20 parts by mass or more and 100 parts by mass or less of the compound with a glucose ring can further improve, for example, the adhesiveness and gas barrier properties.

In one embodiment, the normalized intensity of $NO_2^-$ ion in the anchor coat layer measured by time-of-flight secondary ion mass spectrometry (TOFSIMS) may be 0.5 or more, 1.0 or more, or 2.0 or more, preferably 3.0 or more, more preferably 3.2 or more, still more preferably 3.5 or more. In one embodiment, the normalized intensity of $NO_2^-$ ion in the anchor coat layer is 5.0 or less or 4.5 or less, preferably 4.2 or less, more preferably 4.0 or less. A normalized intensity of $NO_2^-$ ion of 3.0 or more tends to result in better gas barrier properties and the anchor coat layer with better appearance. A normalized intensity of $NO_2^-$ ion of 4.2 or less tends to result in better gas barrier properties and higher adhesion between the anchor coat layer and the inorganic vapor deposition film.

The normalized intensity of $NO_2^-$ ion is calculated as described below. The normalization is performed by dividing the detected intensity of $NO_2^-$ ion (mass number 45.992) by the detected intensity of $CN^-$ ion (mass number 26.002) and multiplying 100,000 times. The common logarithm value of the average normalized detected intensity of $NO_2^-$ ion in a

central region of the anchor coat layer in the thickness direction is defined as the normalized intensity of $NO_2^-$ ion in the anchor coat layer. The central region of the anchor coat layer refers to a region near the center of the anchor coat layer and with a thickness of 50% of the thickness of the anchor coat layer.

Normalized intensity of $NO_2^-$ ion = $\log_{10}$\{(detected intensity of $NO_2^-$ ion/detected intensity of $CN^-$ ion) x 100,000\}

The intensity of each ion is measured as described below. Using a time-of-flight secondary ion mass spectrometer (TOF.SIMS5 manufactured by ION TOF), soft etching is repeated at a constant rate from the outside of a transfer film with a Cs (cesium) ion gun to detect ions in each layer. Specific measurement conditions are described in Examples.

The thickness of the anchor coat layer is measured as described below.

In a graph before normalization obtained by the TOF-SIMS measurement, the position where the intensity of an ion derived from an inorganic vapor deposition film is 50% of the maximum intensity of the ion derived from the inorganic vapor deposition film is defined as the interface between the inorganic vapor deposition film and the anchor coat layer. The ion derived from the inorganic vapor deposition film is, for example, $SiO_2$ (mass number 59.96) in a silica vapor deposition film.

In a graph before normalization obtained by the TOF-SIMS measurement, the position where the intensity of $CN^-$ ion is 50% of the maximum intensity of the $CN^-$ ion is defined as the interface between the anchor coat layer and the heat seal layer.

The distance between the two interfaces in the thickness direction is defined as the thickness of the anchor coat layer.

In one embodiment, the anchor coat layer may have a transition point of 70°C or more and 140°C or less. The transition point is preferably 90°C or more, more preferably 95°C or more, still more preferably 100°C or more, particularly preferably 105°C or more. The transition point may be, for example, 135°C or less, 130°C or less, 125°C or less, or 120°C or less. A transition point of 90°C or more tends to result in better gas barrier properties. A transition point of 125°C or less tends to result in better gas barrier properties.

The transition point of the anchor coat layer is a value measured by local thermal analysis using a thermal probe. In the local thermal analysis using the thermal probe, while the thermal probe is in contact with a cross section of the anchor coat layer, the deflection in the normal direction of the cross section of the anchor coat layer from before heating of the thermal probe is measured while increasing the temperature to obtain a thermal expansion curve.

The cross section is obtained by cutting in the thickness direction perpendicular to the main surface of the transfer film. The thermal probe comes into contact with a portion near the central portion of the anchor coat layer in the thickness direction in a portion where a cross section of the anchor coat layer is exposed. The measurement is performed at five or more points in a cross section, and the transition point is described as the arithmetic mean of reproducibly measured values at five points.

In the local thermal analysis, the thermal probe is pushed up by the expansion of a resin contained in the anchor coat layer due to heating. Structural transition of the resin in the anchor coat layer or the like changes the slope (deflection/temperature) of the thermal expansion curve. In the structural transition, particularly from expansion to softening, of the resin in the anchor coat layer, the tip of the thermal probe enters the resin, and the thermal probe descends. The point at which the deflection of the thermal probe changes from rising to falling corresponds to a peak of the thermal expansion curve and is referred to as a softening point. The transition point of the anchor coat layer is determined by reading the temperature at the peak of the thermal expansion curve.

A "shoulder peak" may appear in the thermal expansion curve as the slope (deflection/temperature) of the thermal expansion curve changes. A "shoulder peak" is defined as a point that does not have a clear convex shape and at which the slope (deflection/temperature) of the thermal expansion curve changes and decreases to near 0. An inflection point is obtained by drawing a tangent line of the thermal expansion curve in a temperature zone before and after the slope of the thermal expansion curve changes and calculating the temperature of the intersection point. The temperature of this inflection point is referred to as the "shoulder peak" temperature.

When a peak of the thermal expansion curve is obtained, the temperature of the peak of the thermal expansion curve is defined as the transition point. When no peak of the thermal expansion curve is obtained and a "shoulder peak" is obtained, or when a "shoulder peak" is observed at a temperature lower than the temperature at which a peak is obtained, the temperature of the "shoulder peak" is regarded as the transition point. The transition point at the lowest temperature after the start of the measurement is defined as the transition point of the anchor coat layer.

Details of the measurement conditions are described in Examples.

The anchor coat layer preferably has a thickness of 0.01 μm or more, more preferably 0.05 μm or more, still more preferably 0.1 μm or more, and preferably 10 μm or less, more preferably 5 μm or less, still more preferably 3 μm or less. A thickness of not less than the lower limit results in, for example, sufficient adhesion strength between the heat seal layer and the inorganic vapor deposition film. A thickness of not more than the upper limit can result in, for example, the anchor

coat layer satisfactorily formed on the heat seal layer.

<Inorganic Vapor Deposition Film>

A transfer film according to the present disclosure includes an inorganic vapor deposition film. The inorganic vapor deposition film is preferably a layer directly formed by vapor deposition on one surface of the heat seal layer or on one surface of the anchor coat layer when the anchor coat layer is provided.

The inorganic vapor deposition film is a layer for suppressing permeation of gases, such as oxygen gas and water vapor. Thus, for example, a gas barrier laminate produced by transferring a transfer layer from a transfer film according to the present disclosure to a transfer object has good gas barrier properties. When the inorganic vapor deposition film is an opaque layer, the inorganic vapor deposition film may have a light-shielding effect against sunlight or the like and may also have aroma retention properties for the contents.

The inorganic vapor deposition film may be a metallized film composed of a metal or a vapor deposition film composed of an inorganic compound.

The metal constituting the metallized film is, for example, aluminum, chromium, tin, nickel, copper, silver, gold, or platinum. Among these, aluminum is preferred. Thus, an aluminum vapor deposition film is preferred.

The inorganic compound constituting the vapor deposition film is, for example, a metal oxide, a metal nitride, a metal carbide, or a composite inorganic compound, such as indium tin oxide (ITO) or SiOXCY. Among these, a metal oxide is preferred.

A metal element constituting the inorganic compound is, for example, aluminum (Al), silicon (Si), magnesium (Mg), calcium (Ca), potassium (K), tin (Sn), sodium (Na), boron (B), titanium (Ti), lead (Pb), zirconium (Zr), yttrium (Y), zinc (Zn), vanadium (V), barium (Ba), or chromium (Cr).

The inorganic compound has an average composition, for example, represented by $MO_x$ or $MO_xC_y$, such as $AlO_x$, $SiO_x$, or $SiO_xC_y$. In the formulae, M denotes the metal element described above, and x and y are in different ranges depending on the metal element.

For a metal oxide, x can be more than 0 and 1.5 or less for aluminum, more than 0 and 2 or less for silicon, more than 0 and 1 or less for magnesium, more than 0 and 1 or less for calcium, more than 0 and 0.5 or less for potassium, more than 0 and 2 or less for tin, more than 0 and 0.5 or less for sodium, more than 0 and 1.5 or less for boron, more than 0 and 2 or less for titanium, more than 0 and 1 or less for lead, more than 0 and 2 or less for zirconium, and more than 0 and 1.5 or less for yttrium.

In $MO_x$, the upper limit of the range of x is a value after complete oxidation. x is preferably 0.5 or more and 1.5 or less for aluminum oxide and 1.0 or more and 2.0 or less for silicon oxide.

Among metal oxides, aluminum oxide, silicon oxide, magnesium oxide, calcium oxide, boron oxide, titanium oxide, zirconium oxide, and barium oxide are preferred, and aluminum oxide and silicon oxide are more preferred.

The inorganic vapor deposition film may be formed of one type of metal or inorganic compound or a combination of two or more types of metals or inorganic compounds. The inorganic vapor deposition film may be composed of a single layer or two or more layers with the same or different compositions.

When the inorganic vapor deposition film is multilayer, vapor deposition can be performed such that each layer has good gas barrier properties, and the inorganic vapor deposition film can have better gas barrier properties than monolayer inorganic vapor deposition films. When the inorganic vapor deposition film is composed of a plurality of layer with different compositions, the permeation of oxygen gas, water vapor, and the like can be more efficiently suppressed because the inorganic vapor deposition film is composed of different discontinuous layers.

The inorganic vapor deposition film preferably has a thickness of 3 nm or more, more preferably 4 nm or more, still more preferably 5 nm or more, and preferably 300 nm or less, more preferably 250 nm or less, still more preferably 200 nm or less, particularly preferably 80 nm or less or 60 nm or less. A thickness of not less than the lower limit results in, for example, sufficient oxygen barrier properties and water vapor barrier properties. A thickness of not more than the upper limit can result in, for example, fewer cracks in the inorganic vapor deposition film.

In one embodiment, the inorganic vapor deposition film composed of aluminum oxide preferably has a thickness of 3 nm or more, more preferably 5 nm or more, and preferably 100 nm or less, more preferably 50 nm or less. In one embodiment, the inorganic vapor deposition film composed of silicon oxide preferably has a thickness of 3 nm or more, more preferably 10 nm or more, and preferably 300 nm or less, more preferably 50 nm or less. The inorganic vapor deposition film composed of silicon oxide preferably has a thickness of 20 nm or more and 40 nm or less.

The inorganic vapor deposition film may be surface-treated. This can improve the adhesion between the inorganic vapor deposition film and an adjacent layer (for example, an adhesive layer). A method for the surface treatment is, for example, physical surface treatment, such as corona discharge treatment, ozone treatment, plasma treatment, glow discharge treatment, or sandblasting treatment; or chemical surface treatment, such as oxidation treatment with a chemical.

<Protective Layer>

A transfer film according to the present disclosure may further include a protective layer on the surface of the inorganic vapor deposition film opposite the heat seal layer. This can reduce scratches on the inorganic vapor deposition film, for example.

In one embodiment, the protective layer contains a resin component.

The resin component is, for example, polyethylene, polypropylene, polystyrene, a vinyl chloride resin, a polyester, a (meth)acrylic resin, a urethane resin, a melamine resin, or an epoxy resin. The resin component is, for example, a urethane resin.

The resin component content of the protective layer may be 50% by mass or more or 75% by mass or more, and 95% by mass or less or 90% by mass or less.

The protective layer may contain an additive agent. The additive agent is, for example, a curing agent, an antistatic agent, an ultraviolet absorber, a colorant, a heat stabilizer, or a silane coupling agent. The silane coupling agent is, for example, a vinyl, epoxy, styryl, methacrylic, acrylic, amino, isocyanurate, ureido, mercapto, sulfide, or isocyanate silane coupling agent.

The protective layer preferably has a thickness of 0.01 μm or more, more preferably 0.05 μm or more, still more preferably 0.1 μm or more, and preferably 5 μm or less, more preferably 3 μm or less, still more preferably 1 μm or less.

For example, a transfer film according to the present disclosure may include a barrier coating layer as a protective layer on the inorganic vapor deposition film when the inorganic vapor deposition film is composed of a metal oxide, such as aluminum oxide or silicon oxide. This can further improve the gas barrier properties of a barrier laminate, for example.

In one embodiment, the barrier coating layer contains a gas barrier resin. The gas barrier resin is, for example, an ethylene-vinyl alcohol copolymer, poly(vinyl alcohol), or poly(meth)acrylonitrile; a polyamide, such as nylon 6, nylon 6,6, or poly(m-xylylene adipamide) (MXD6); a polyester; a polyurethane; or a (meth)acrylic resin.

The gas barrier resin content of the barrier coating layer is preferably 50% by mass or more, more preferably 50% by mass or more, still more preferably 75% by mass or more, and preferably 95% by mass or less, more preferably 90% by mass or less. A content of not less than the lower limit can result in, for example, a barrier laminate with further improved gas barrier properties.

The barrier coating layer may contain the additive agent described above.

The barrier coating layer preferably has a thickness of 0.01 μm or more, more preferably 0.1 μm or more, preferably 10 μm or less, more preferably 5 μm or less. A thickness of not less than the lower limit can result in, for example, a barrier laminate with further improved gas barrier properties. A thickness of not more than the upper limit can result in, for example, a barrier laminate with improved processability.

In another embodiment, the barrier coating layer is a gas barrier coating film formed by polycondensation of a composition containing a metal alkoxide and a water-soluble polymer by a sol-gel method in the presence of a sol-gel method catalyst, water, an organic solvent, and the like. Such a barrier coating layer on the inorganic vapor deposition film can improve the gas barrier properties.

In one embodiment, the metal alkoxide is represented by the following general formula:

$$R^1{}_nM(OR^2)_m$$

In the formula, $R^1$ and $R^2$ independently denote an organic group with 1 or more and 8 or less carbon atoms, M denotes a metal atom, n denotes an integer of 0 or more, m denotes an integer of 1 or more, and n + m denotes the valence of M.

The organic group denoted by $R^1$ and $R^2$ is, for example, an alkyl group with 1 or more and 8 or less carbon atoms, more specifically a methyl group, an ethyl group, a n-propyl group, an isopropyl group, a n-butyl group, or an isobutyl group. The metal atom M is, for example, silicon, zirconium, titanium, or aluminum.

The metal alkoxide satisfying the general formula described above is, for example, tetramethoxysilane ($Si(OCH_3)_4$), tetraethoxysilane ($Si(OC_2H_5)_4$), tetrapropoxysilane ($Si(OC_3H_7)_4$), or tetrabutoxysilane ($Si(OC_4H_9)_4$).

The metal alkoxide is preferably used together with a silane coupling agent. The silane coupling agent may be a known organoalkoxysilane with an organic reactive group and is preferably an organoalkoxysilane with an epoxy group. The organoalkoxysilane with an epoxy group is, for example, γ-glycidoxypropyltrimethoxysilane, γ-glycidoxypropylmethyldiethoxysilane, or β-(3,4-epoxycyclohexyl)ethyltrimethoxysilane. The silane coupling agent is preferably used in an amount of 1 part by mass or more and 20 parts by mass or less per 100 parts by mass of the metal alkoxide.

The water-soluble polymer is preferably poly(vinyl alcohol) or an ethylene-vinyl alcohol copolymer. Depending on desired physical properties, such as oxygen barrier properties, water vapor barrier properties, water resistance, and weatherability, either or both of poly(vinyl alcohol) and an ethylene-vinyl alcohol copolymer may be used, or a gas barrier coating film produced using poly(vinyl alcohol) and a gas barrier coating film produced using an ethylene-vinyl alcohol copolymer may be stacked.

The water-soluble polymer content of the composition is preferably 5 parts by mass or more and 500 parts by mass or less per 100 parts by mass of the metal alkoxide. A content of not less than the lower limit can result in, for example, a barrier laminate with further improved gas barrier properties. A content of not more than the upper limit can result in, for example, the composition with further improved film-forming properties.

The sol-gel method catalyst is preferably an acid or an amine compound.

The amine compound is preferably a tertiary amine that is substantially insoluble in water and that is soluble in an organic solvent, for example, N,N-dimethylbenzylamine, tripropylamine, tributylamine, or tripentylamine. Among these, N,N-dimethylbenzylamine is preferred.

The amount of the amine compound used is preferably 0.01 parts by mass or more, more preferably 0.03 parts by mass or more, and preferably 1.0 parts by mass or less, more preferably 0.3 parts by mass or less, per 100 parts by mass of the metal alkoxide. An amount of use of not less than the lower limit can result in, for example, an improved catalytic effect. An amount of use of not more than the upper limit can result in, for example, a gas barrier coating film with a uniform thickness.

An acid is suitable for use as a sol-gel method catalyst, mainly as a catalyst for the hydrolysis of a metal alkoxide, a silane coupling agent, or the like. The acid is, for example, a mineral acid, such as sulfuric acid, hydrochloric acid, or nitric acid, or an organic acid, such as acetic acid or tartaric acid.

The amount of acid used is preferably 0.001 mol or more and 0.05 mol or less per total mole of the metal alkoxide and the alkoxide moiety (for example, the silicate moiety) of the silane coupling agent. An amount of acid used of not less than the lower limit can result in, for example, an improved catalytic effect. An amount of acid used of not more than the upper limit can result in, for example, a gas barrier coating film with a uniform thickness.

The composition preferably contains water in an amount of 0.1 mol or more, more preferably 0.8 mol or more, and preferably 100 mol or less, more preferably 2 mol or less, per total mole of the alkoxide. A water content of not less than the lower limit can result in, for example, a barrier laminate with further improved gas barrier properties. A water content of not more than the upper limit can result in, for example, a rapid hydrolysis reaction.

The composition may contain an organic solvent. The organic solvent is, for example, an alcohol solvent, such as methyl alcohol, ethyl alcohol, n-propyl alcohol, isopropyl alcohol, or n-butanol.

The gas barrier coating film preferably has a thickness of 0.01 μm or more, more preferably 0.1 μm or more, and preferably 100 μm or less, more preferably 50 μm or less. This can further improve the gas barrier properties of a barrier laminate. A thickness of not less than the lower limit can result in, for example, a barrier laminate with further improved gas barrier properties and an inorganic vapor deposition film with fewer cracks. A thickness of not more than the upper limit can result in, for example, a barrier laminate that can be suitable for use in the production of a monomaterial packaging container.

<Adhesive Layer>

A transfer film according to the present disclosure may include an adhesive layer on the surface of the inorganic vapor deposition film opposite the heat seal layer. The adhesive layer is a layer for bonding a transfer object (for example, a paper member including a paper substrate) to a transfer film including a support substrate, a heat seal layer, and an inorganic vapor deposition film in a transfer method described later. The transfer film does not necessarily include an adhesive layer and, for example, an adhesive layer may be provided on a transfer object.

In one embodiment, the adhesive layer is a layer in contact with the inorganic vapor deposition film. In the present embodiment, the adhesive layer protects the inorganic vapor deposition film. For example, when a bending load is applied to the transfer film, the adhesive layer reduces the occurrence of cracks in the inorganic vapor deposition film, and even when a minute crack is initiated in the inorganic vapor deposition film after a bending load is applied, the adhesive layer reduces the deterioration of the gas barrier properties.

The adhesive layer is described in detail later and is not described here.

<Layer Structure of Transfer Film>

Several examples of the layer structure of a transfer film according to the present disclosure are described below.

- Inorganic vapor deposition film/HS layer/support substrate
- Inorganic vapor deposition film/AC layer/HS layer/support substrate
- Protective layer/inorganic vapor deposition film/HS layer/support substrate
- Protective layer/inorganic vapor deposition film/AC layer/HS layer/support substrate

- Protective layer/protective layer/inorganic vapor deposition film/HS layer/support substrate
- Protective layer/protective layer/inorganic vapor deposition film/AC layer/HS layer/support substrate

The "HS layer" refers to a heat seal layer, the "AC layer" refers to an anchor coat layer, and the "/" refers to an interface.

[Method For Producing Transfer Film]

A method for producing a transfer film according to the present disclosure may include the step of forming a heat seal layer on a support substrate (hereinafter also referred to as a "heat seal layer forming step"), the step of forming an anchor coat layer on the heat seal layer if necessary (hereinafter also referred to as an "anchor coat layer forming step"), and the step of forming an inorganic vapor deposition film on the heat seal layer or the anchor coat layer (hereinafter also referred to as a "vapor deposition film forming step"). The production method may include the step of forming a protective layer on the inorganic vapor deposition film (hereinafter also referred to as a "protective layer forming step").

<Heat Seal Layer Forming Step>

The heat seal layer can be formed, for example, by applying a coating liquid for the heat seal layer to one surface of the support substrate and drying the coating liquid. The heat seal layer is preferably provided on a surface of the support substrate that is not subjected to adhesion promoting treatment or on a surface on which an adhesion promoting layer is not formed.

The coating liquid for the heat seal layer is preferably a coating liquid that can form a coating film on a support substrate and that can form a coating film easily separable from the support substrate and having high heat sealability. The coating liquid for the heat seal layer is described in detail above.

In one embodiment, the coating liquid for the heat seal layer is applied to a support substrate and is dried. The coating liquid for the heat seal layer is applied, for example, by a known coating method, such as a gravure coating method, a reverse coating method, an air knife coating method, a comma coating method, a die coating method, a blade coating method, a roll coating method, a bar coating method, a curtain coating method, a spray coating method, a lip coating method, or a dipping method.

The applied coating liquid for the heat seal layer is dried, for example, by a method of applying heat, such as hot-air drying, hot-roll drying, or infrared irradiation. The drying temperature is preferably 50°C or more and 150°C or less.

<Anchor Coat Layer Forming Step>

An anchor coat layer on the heat seal layer can improve the adhesiveness of the inorganic vapor deposition film and can smooth a vapor deposition surface. The anchor coat layer is not necessarily provided depending on the required gas barrier level and required interlayer strength.

An anchor coating agent can be prepared, for example, by mixing the resin component described above or a precursor resin thereof (for example, a thermosetting resin), an optional curing agent, an optional additive agent, and a solvent. These components are described in detail above, and the solvent may be the same as the solvent for the coating liquid for the heat seal layer.

The anchor coat layer can be formed, for example, by applying an anchor coating agent to a heat seal layer and drying the anchor coating agent. The anchor coating agent may be applied by a known application method as described above. The applied anchor coating agent is dried, for example, by a method of applying heat, such as hot-air drying, hot-roll drying, or infrared irradiation. The drying temperature is preferably 50°C or more and 150°C or less.

<Vapor Deposition Film Forming Step>

The inorganic vapor deposition film is preferably a layer directly formed by vapor deposition on one surface of the heat seal layer or the anchor coat layer. The inorganic vapor deposition film is formed, for example, by a physical vapor deposition method (PVD method), such as a vacuum deposition method, a sputtering method, an ion plating method, or a cluster ion beam method; or a chemical vapor deposition method (CVD method), such as a plasma chemical vapor deposition method, a thermal chemical vapor deposition method, or a photochemical vapor deposition method. The inorganic vapor deposition film may be a composite film with two or more different layers formed by using both the physical vapor deposition method and the chemical vapor deposition method. The heating means is, for example, a resistance heating means, an induction heating means, or an electron beam heating means.

The gas pressure of a vapor deposition chamber is preferably $10^{-8}$ mbar or more and $10^{-2}$ mbar or less. To form an

inorganic vapor deposition film composed of an inorganic compound, for example, oxygen gas, nitrogen gas, or carbon dioxide gas is introduced as a reactant gas. To form an inorganic vapor deposition film composed of a metal oxide, the gas pressure after oxygen gas is introduced is preferably $10^{-6}$ mbar or more and $10^{-1}$ mbar or less.

The amount of reactant gas to be introduced varies with the size of a vapor deposition apparatus. The reactant gas, such as oxygen gas, to be introduced may contain as a carrier gas an inert gas, such as argon gas, helium gas, or nitrogen gas, without any problem.

To continuously form an inorganic vapor deposition film using a rolled transfer substrate, the transfer speed of the transfer substrate on which a heat seal layer and an optional anchor coat layer are formed is, for example, 10 m/min or more and 800 m/min or less.

To form an inorganic vapor deposition film, the surface of a layer on which the inorganic vapor deposition film is to be deposited can be cleaned by pretreatment with Ar gas, $O_2$, $N_2$, or the like to generate a polar group, a free radical, or the like on the surface of the layer and enhance the adhesion between the inorganic vapor deposition film and the layer.

In one embodiment, a PVD method includes, for example, feeding a substrate from a unwinding roll into a vapor deposition chamber in a winding type vapor deposition apparatus, evaporating a deposition source heated in a crucible, forming an inorganic vapor deposition film on the substrate on a cooled coating drum while blowing oxygen gas or the like from an oxygen gas outlet as necessary, and then winding the substrate with a take-up roll.

In one embodiment, a PE-CVD method includes, for example, introducing a gas mixture containing, for example, an organosilicon compound as a monomer gas, oxygen gas, an inert gas, and the like into a vapor deposition chamber and generating plasma to form an inorganic vapor deposition film composed of silicon oxide or the like on a substrate.

The substrate includes a transfer substrate, a heat seal layer, and an optional anchor coat layer. A transfer film thus produced includes the transfer substrate, the heat seal layer, the optional anchor coat layer, and the inorganic vapor deposition film in this order in the thickness direction.

<Protective Layer Forming Step>

A protective layer can be formed, for example, by applying a coating liquid for the protective layer to an inorganic vapor deposition film and drying the coating liquid. The coating liquid for the protective layer may be applied by a known application method as described above. The applied coating liquid for the protective layer is dried, for example, by a method of applying heat, such as hot-air drying, hot-roll drying, or infrared irradiation. The drying temperature is preferably 50°C or more and 150°C or less.

The coating liquid for the protective layer can be prepared, for example, by mixing the resin component described above, an optional curing agent, an optional additive agent, and a solvent. These components are described in detail above, and the solvent may be the same as the solvent for the coating liquid for the heat seal layer.

The barrier coating layer can be formed as a protective layer, for example, by dissolving or dispersing a material, such as a gas barrier resin, in water or an appropriate organic solvent, and applying the resulting coating liquid to an inorganic vapor deposition film and drying the coating liquid. The barrier coating layer can also be formed, for example, by applying and drying a commercially available barrier coating agent.

In one embodiment, the barrier coating layer is the gas barrier coating film described above. The gas barrier coating film can be formed, for example, by applying the composition containing a metal alkoxide and a water-soluble polymer by a known application method and then subjecting the composition to polycondensation by a sol-gel method.

One embodiment of a method of forming a gas barrier coating film is described below.

First, a metal alkoxide, a water-soluble polymer, a sol-gel method catalyst, water, an organic solvent, an optional silane coupling agent, and the like are mixed to prepare a composition. A polycondensation reaction progresses gradually in the composition.

The composition is then applied to an inorganic vapor deposition film by a known application method and is dried. The drying further promotes the polycondensation reaction of the metal alkoxide and the water-soluble polymer (and the silane coupling agent when the composition contains the silane coupling agent), thus forming a layer of a composite polymer.

Finally, the composition is preferably heated at a temperature of 20°C or more and 250°C or less, more preferably 50°C or more and 220°C or less, for 1 second or more and 10 minutes or less. Thus, a gas barrier coating film can be formed.

[Barrier Laminate]

In one embodiment, a barrier laminate according to the present disclosure includes a substrate, such as a paper substrate, an adhesive layer, an inorganic vapor deposition film, and a heat seal layer in this order in the thickness direction. In one embodiment, a barrier laminate according to the present disclosure further includes an anchor coat layer between the inorganic vapor deposition film and the heat seal layer. The inorganic vapor deposition film is in contact with

the heat seal layer or the anchor coat layer (when the anchor coat layer is provided).

In one embodiment, a barrier laminate according to the present disclosure includes a substrate, such as a paper substrate, an adhesive layer, an inorganic vapor deposition film, and a heat seal layer in this order in the thickness direction. In one embodiment, a barrier laminate according to the present disclosure further includes an anchor coat layer between the inorganic vapor deposition film and the heat seal layer. The barrier laminate according to this embodiment includes no separation layer between the inorganic vapor deposition film and the heat seal layer.

Fig. 3 illustrates one embodiment of a barrier laminate according to the present disclosure. A barrier laminate 1 in Fig. 3 includes a substrate 10, an adhesive layer 20, an inorganic vapor deposition film 30, and a heat seal layer 40 in this order in the thickness direction.

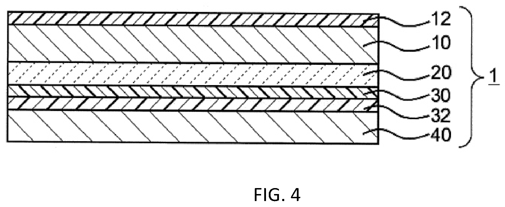

Fig. 4 illustrates another embodiment of a barrier laminate according to the present disclosure. A barrier laminate 1 in Fig. 4 includes a print layer 12, a substrate 10, an adhesive layer 20, an inorganic vapor deposition film 30, an anchor coat layer 32, and a heat seal layer 40 in this order in the thickness direction.

A barrier laminate according to the present disclosure includes no separation layer between the heat seal layer and the inorganic vapor deposition film and therefore has high adhesion strength between these layers. Thus, a barrier laminate according to the present disclosure is less likely to cause delamination in the production process and during use thereof.

In a known transfer film including a transfer support and a transfer layer, a separation layer is typically a layer provided as a surface layer of the transfer layer facing the transfer support to improve the separability of the transfer layer from the transfer support. Thus, the transfer layer includes a separation layer as a surface layer on the transfer support side.

The separation layer is typically a layer containing a separating agent. The separating agent is, for example, a wax, such as silicone wax, silicone oil, a silicone resin, a fluoropolymer, or a phosphate. In one embodiment, the separation layer contains a resin component. The resin component is, for example, a polyolefin, a vinyl resin, a styrene resin, a (meth) acrylic resin, a polyester, a polyurethane, a polycarbonate, a polyamide, a polyimide, or a cellulose resin.

<Substrate>

A barrier laminate according to the present disclosure includes a substrate.

The substrate is, for example, a paper substrate or the resin film described above as a support substrate. Among these, a paper substrate is preferred. A barrier laminate including a paper substrate as a substrate is also referred to as a "barrier paper".

The paper substrate is, for example, a paper material, such as kraft paper, machine glazed paper, high-quality paper, medium-quality paper, glassine paper, Kent paper, converting paper, paperboard, or synthetic paper. The paper substrate is, for example, a paper substrate in which a filler layer or a resin layer is formed on one or both sides of a paper material, such as clay coated paper, ultra lightweight coated paper, coated printing paper (for example, coated paper, cast-coated paper, or art paper), resin-coated paper, base paper for release paper, or double-coated paper for release paper.

The paper substrate may contain an additive agent. The additive agent is, for example, a sizing agent, a lubricant, an antioxidant, an ultraviolet absorber, a light stabilizer, an antistatic agent, a fluorescent brightener, a fluorescent decolorizer, a filler, a reinforcing agent, a pigment, or a dye. The additive agent can be added in any amount depending on the purpose without adversely affecting other performances.

The surface of the substrate on the adhesive layer side may be subjected in advance to physical surface treatment, such as corona discharge treatment, ozone treatment, plasma treatment, glow discharge treatment, or sandblasting treatment; or chemical surface treatment, such as oxidation treatment with a chemical.

In one embodiment, the paper substrate includes the paper material and a filler layer or a resin layer formed on the surface of the paper material on the adhesive layer side. The filler layer has the function of suppressing the penetration of an adhesive agent constituting the adhesive layer into the paper material and stabilizing the adhesive strength of the adhesive layer.

In one embodiment, the filler layer or the resin layer contains a resin component. The resin component is, for example, a thermoplastic resin, including a polyolefin, such as polyethylene or polypropylene, a vinyl resin, such as a vinyl chloride resin or a vinyl acetate resin, a styrene resin, such as a styrene-butadiene copolymer, a (meth)acrylic resin, a polyester, a polyamide, a polyurethane, or a cellulose resin; or a cured product of a thermosetting resin.

In one embodiment, the filler layer or the resin layer contains an additive agent. The additive agent is, for example, a lubricant, an antioxidant, an ultraviolet absorber, a light stabilizer, an antistatic agent, a fluorescent brightener, a fluorescent decolorizer, a filler, a reinforcing agent, a pigment, or a dye. The filler layer or the resin layer preferably contains a filler. The filler is, for example, clay, silica, calcium carbonate, titanium oxide, or zinc oxide.

The filler layer or the resin layer can be formed, for example, by an application method or an extrusion coating method. The filler layer or the resin layer has a thickness of, for example, 0.1 μm or more and 30 μm or less.

In general, the surface of a paper material is porous and uneven, and it may therefore be preferred to form a filler

layer with a thickness of 20 μm or more on the surface of the paper material when an inorganic vapor deposition film is directly formed on the paper material. In the present disclosure, however, a barrier paper can be produced by a transfer method described later, and it is not necessary to directly form an inorganic vapor deposition film on a paper material. Thus, it is not necessary to form such a thick filler coating layer on the surface of a paper material.

In general, when a paper material is placed in a vapor deposition apparatus to form an inorganic vapor deposition film under reduced pressure, the pressure in the vapor deposition apparatus is sometimes not reduced to a pressure suitable for vapor deposition due to a paper powder generated from the paper material. This makes it difficult to form a stable inorganic vapor deposition film, tends to result in insufficient adhesion between the formed inorganic vapor deposition film and the paper material, and may make the gas barrier properties unstable. In the present disclosure, however, a barrier paper can be produced by a transfer method described later, and it is not necessary to place a paper material in a vapor deposition apparatus to directly form an inorganic vapor deposition film on the paper material. Thus, the above problems can be avoided.

As described above, in the present disclosure, a substrate composed of a paper material and not impregnated with a resin component, a clay material, or the like can be used as a paper substrate. In the present disclosure, a substrate composed of a paper material and not including a filler layer, a resin layer, or a clay coating layer can be used as a paper substrate.

A substrate, such as a paper substrate, may be composed of one layer or two or more layers composed of the same or different substrates. Substrates can be laminated by any laminating means through a known adhesive layer.

A substrate, such as a paper substrate, preferably has a thickness of 10 μm or more, more preferably 30 μm or more, still more preferably 40 μm or more, and preferably 1,500 μm or less, more preferably 500 μm or less, still more preferably 300 μm or less. A paper substrate preferably has a basis weight of 30 g/m$^2$ or more, more preferably 50 g/m$^2$ or more, and preferably 600 g/m$^2$ or less, more preferably 450 g/m$^2$ or less. The thickness of a substrate composed of multiple layers refers to the total thickness of the multilayer substrate. The same applies to the basis weight.

With such a thickness and/or basis weight, for example, a barrier laminate can have appropriate strength and rigidity. A thickness and/or basis weight of not less than the lower limit can result in, for example, less curling and waving during the production of a barrier laminate. A thickness and/or basis weight of not more than the upper limit can result in strength and rigidity in an appropriate range and a smaller decrease in work efficiency.

<Print Layer>

In one embodiment, a barrier laminate according to the present disclosure includes a print layer on a substrate, such as a paper substrate. A barrier laminate according to the present disclosure can include a print layer on the surface of the substrate opposite the adhesive layer and/or on the surface of the substrate facing the adhesive layer, and preferably includes a print layer on the surface of the substrate opposite the adhesive layer.

The print layer includes an image, for example. The image is, for example, a letter, a figure, a symbol, a picture, a pattern, or a combination thereof. The print layer is provided, for example, to indicate the contents of a packaging material, to indicate the expiration date, to indicate the manufacturer and the seller, for ornament, and to add an aesthetic sense.

In one embodiment, the print layer is formed using a print layer composition, such as a thermoplastic resin composition, a thermosetting resin composition, or an energy beam curable resin composition, each containing a colorant. More specifically, the print layer contains a thermoplastic resin, a cured product of a thermosetting resin, or a cured product of an energy beam curable resin, and a colorant.

The thermoplastic resin composition contains a thermoplastic resin and a colorant.

The thermoplastic resin is, for example, a polyolefin, a vinyl resin, a styrene resin, a (meth)acrylic resin, a polyester, a polyurethane, a polycarbonate, a polyamide, a polyimide, a cellulose resin, a petroleum resin, or a fluoropolymer.

The thermoplastic resin composition can contain an additive agent. The additive agent is, for example, a lubricant, an antioxidant, an ultraviolet absorber, a light stabilizer, an antistatic agent, a fluorescent brightener, a fluorescent decolorizer, a filler, a reinforcing agent, a pigment, or a dye.

The thermosetting resin composition is a composition that contains a thermosetting resin, a colorant, and an optional curing agent and is cured by heating. In one embodiment, the thermosetting resin composition is a so-called thermosetting ink.

The thermosetting resin is, for example, a phenolic resin, a melamine resin, a urea resin, an epoxy resin, an unsaturated polyester, a thermosetting polyurethane, a silicone resin, or a (meth)acrylic thermosetting resin. The curing agent is, for example, an epoxy curing agent or an isocyanate curing agent. The thermosetting resin composition can contain the additive agent described above.

The energy beam curable resin composition is a composition that contains a compound with an energy beam curable functional group (hereinafter also referred to as an "energy beam curable compound") and a colorant and is cured by energy beam irradiation. In one embodiment, the energy beam curable resin composition is a so-called ultraviolet-

curable ink, preferably a (meth)acrylic ultraviolet-curable ink.

The energy beam is, for example, electromagnetic waves, such as ultraviolet radiation, infrared radiation, X-rays, or $\gamma$ radiation; or a charged particle beam, such as an electron beam, a proton beam, or a neutron beam. Among these, ultraviolet radiation is preferred from the perspective of curing rate, availability of an irradiation source, and cost.

The energy beam curable functional group is, for example, an ethylenically unsaturated group, such as a (meth) acryloyl group, a vinyl group, or an allyl group; or an epoxy group or an oxetanyl group. The energy beam curable compound is, for example, a compound with an ethylenically unsaturated group, preferably a compound with two or more ethylenically unsaturated groups, more preferably a polyfunctional (meth)acrylate compound. The polyfunctional (meth) acrylate compound may be a monomer or an oligomer.

When the energy beam curable compound is an ultraviolet-curable compound, the energy beam curable composition (ultraviolet-curable resin composition) preferably contains at least one selected from photopolymerization initiators and photopolymerization accelerators.

The energy beam curable resin composition can contain the additive agent described above.

The colorant is, for example, a pigment or a dye. More specifically, the pigment may be titanium oxide, zinc white, carbon black, iron oxide, yellow iron oxide, ultramarine blue, a metallic pigment, a pearl pigment, or a fluorescent pigment. The print layer may be a high luminance layer with a high metallic luster.

The print layer composition can contain an organic solvent and/or water from the perspective of improving coating performance or the like. The organic solvent is, for example, a hydrocarbon solvent, such as toluene or xylene; a ketone solvent, such as acetone or methyl ethyl ketone; an ester solvent, such as ethyl acetate, cellosolve acetate, or butyl cellosolve acetate; or an alcohol solvent, such as propanol.

For example, the print layer can be formed by applying the print layer composition to a substrate, such as a paper substrate, drying the print layer composition, and subsequently heating the print layer composition at a temperature required for curing in the case of a thermosetting resin composition or irradiating the print layer composition with an energy beam in the case of an energy beam curable resin composition. When the print layer composition contains no organic solvent and/or water, drying is not necessary.

The print layer is formed, for example, by a method, such as typography, flexography, gravure printing, offset printing, screen printing, ink jet printing, or thermal transfer printing. The print layer may be provided over the entire surface of the substrate or on part of the substrate.

In one embodiment, the print layer contains a sublimation dye. The print layer of this embodiment can be formed, for example, by sublimation transfer printing using a thermal transfer sheet.

The print layer preferably has a thickness of 0.01 μm or more, more preferably 0.5 μm or more, still more preferably 1 μm or more, and preferably 30 μm or less, more preferably 10 μm or less, still more preferably 5 μm or less.

<Adhesive Layer>

A barrier laminate according to the present disclosure includes an adhesive layer between a substrate and an inorganic vapor deposition film. The adhesive layer is a layer for bonding a transfer object, such as a paper member including a paper substrate, to a transfer film including a support substrate, a heat seal layer, and an inorganic vapor deposition film in a transfer method described later.

In one embodiment, the adhesive layer is a layer in contact with the inorganic vapor deposition film. In the present embodiment, the adhesive layer protects the inorganic vapor deposition film. For example, when a bending load is applied to the barrier laminate, the adhesive layer reduces the occurrence of cracks in the inorganic vapor deposition film, and even when a minute crack is initiated in the inorganic vapor deposition film after a bending load is applied, the adhesive layer reduces the deterioration of the gas barrier properties.

The adhesive layer preferably has a thickness of 0.5 μm or more, more preferably 1 μm or more, and preferably 20 μm or less, more preferably 10 μm or less. The adhesive layer preferably has a basis weight of 1 $g/m^2$ or more, more preferably 2 $g/m^2$ or more, and preferably 20 $g/m^2$ or less, more preferably 10 $g/m^2$ or less.

The adhesive layer can be formed using a known adhesive agent. The adhesive agent may be a one-component curing, two-component curing, or non-curable adhesive agent. The adhesive agent may be a solvent-free adhesive agent or a solvent-based adhesive agent. The adhesive layer may be formed, for example, by a non-solvent lamination method using a non-solvent adhesive agent or a dry lamination method using a dry lamination adhesive agent. An anchor coat layer may be first formed on a layer on which the adhesive layer is to be formed, and then the adhesive layer may be formed.

The anchor coat layer can be formed, for example, using an isocyanate (urethane), poly(ethylene imine), polybutadiene, or organotitanium anchor coating agent; or an (meth)acrylic resin, polyurethane, polyester, epoxy, poly(vinyl acetate), poly(vinyl chloride), or cellulose resin anchor coating agent.

The adhesive agent is, for example, a two-component urethane adhesive agent, a polyester polyurethane adhesive agent, a polyether polyurethane adhesive agent, a (meth)acrylic adhesive agent, a polyester adhesive agent, a polyether adhesive agent, a polyamide adhesive agent, an epoxy adhesive agent, a rubber adhesive agent, a polyolefin

adhesive agent, an acid-modified polyolefin adhesive agent, a poly(vinyl acetate) adhesive agent, or a poly(vinyl chloride) adhesive agent. The acid-modified polyolefin resin is a resin produced by acid modification of a polyolefin resin by graft polymerization or copolymerization using an unsaturated carboxylic acid or an anhydride thereof, such as (meth)acrylic acid, maleic acid, maleic anhydride, fumaric acid, or itaconic acid.

An adhesive agent for forming an adhesive layer between an transfer object, such as a paper substrate, and an inorganic vapor deposition film is preferably a urethane resin composition. In this manner, for example, a gas barrier adhesive layer can be formed. Thus, the adhesive layer is preferably a layer formed using a urethane resin composition. The urethane resin composition preferably contains a polyol with two or more hydroxy groups per molecule and an isocyanate compound with two or more isocyanate groups per molecule. The urethane resin composition may further contain a phosphoric acid compound or an inorganic compound.

The urethane resin composition may be of a solvent-free type or a solvent type.

A commercial product of the adhesive agent is, for example, a dry lamination adhesive agent manufactured by Rock Paint Co., Ltd. (main agent RU-40/curing agent H-1 or main agent RU-77T/curing agent H-7).

The adhesive layer and the urethane resin composition may contain an additive agent. The additive agent is, for example, an antioxidant, an ultraviolet absorber, a light stabilizer, an antistatic agent, a fluorescent brightener, a fluorescent decolorizer, a filler, a reinforcing agent, an anti-blocking agent, a flame retardant, a cross-linker, a pigment, or a dye.

In one embodiment, the adhesive layer preferably has a glass transition temperature (Tg) of - 30°C or more, more preferably 0°C or more, still more preferably 25°C or more, and preferably 80°C or less, more preferably 70°C or less, still more preferably 70°C or less. A Tg of not more than the upper limit tends to result in high flexibility near room temperature and high adhesiveness to a layer adjacent to the adhesive layer. A Tg of not less than the lower limit tends to result in high cohesive force and consequently high adhesiveness.

The adhesive layer can be formed, for example, by applying an adhesive agent to a substrate and/or an inorganic vapor deposition film by a direct gravure roll coating method, a gravure roll coating method, a kiss coating method, a reverse roll coating method, a fountain method, a transfer roll coating method, or the like and drying the adhesive agent.

<<Polyol with Two or More Hydroxy Groups per Molecule>>

The polyol with two or more hydroxy groups per molecule is, for example, a polyol with two or more hydroxy groups per molecule and with at least one selected from a polyester structure, a polyester polyurethane structure, a polyether structure, and a polyether polyurethane structure as a main backbone, preferably a polyol with two or more hydroxy groups per molecule and with at least one selected from a polyester structure and a polyester polyurethane structure as a main backbone, more preferably a polyol with two or more hydroxy groups per molecule and with a polyester structure as a main backbone. The polyester structure can be formed, for example, by a polycondensation reaction of a polycarboxylic acid and a polyhydric hydroxy compound.

The term "polycarboxylic acid" refers to a polycarboxylic acid, an anhydride thereof, or an ester-forming derivative thereof. The polycarboxylic acid is, for example, an aliphatic polycarboxylic acid or an aromatic polycarboxylic acid.

The aliphatic polycarboxylic acid is, for example, succinic acid, glutaric acid, adipic acid, azelaic acid, sebacic acid, dodecanedicarboxylic acid, or 1,4-cyclohexanedicarboxylic acid.

The aromatic polycarboxylic acid is, for example, a dicarboxylic acid, such as o-phthalic acid, isophthalic acid, terephthalic acid, 1,2-naphthalenedicarboxylic acid, 1,8-naphthalenedicarboxylic acid, 2,3-naphthalenedicarboxylic acid, 1,4-naphthalenedicarboxylic acid, 2,5-naphthalenedicarboxylic acid, 2,6-naphthalenedicarboxylic acid, naphthalic acid, biphenyldicarboxylic acid, or 1,2-bis(phenoxy)ethane-p,p'-dicarboxylic acid; or a tri- or higher-valent carboxylic acid, such as trimellitic acid or pyromellitic acid. Among these, an o-aromatic dicarboxylic acid is preferred. The o-aromatic dicarboxylic acid is, for example, o-phthalic acid, 1,2-naphthalenedicarboxylic acid, 1,8-naphthalenedicarboxylic acid, or 2,3-naphthalenedicarboxylic acid.

The polyhydric hydroxy compound is, for example,

an aliphatic polyhydric alcohol, such as an aliphatic diol, including ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, or tripropylene glycol,

an aromatic polyhydric phenol, such as hydroquinone, resorcinol, catechol, naphthalene diol, biphenol, bisphenol A, bisphenol F, tetramethylbiphenol, or an alkylene oxide adduct thereof; or

a hydrogenated alicyclic compound of the aromatic polyhydric phenol.

A structure derived from a polycarboxylic acid constituting the polyester structure or the polyester polyurethane structure preferably has a structure derived from an o-aromatic dicarboxylic acid. 70% by mass or more and 100% by mass or less of a structure derived from a polycarboxylic acid constituting the polyester structure or the polyester polyurethane structure is preferably a structure derived from an o-aromatic dicarboxylic acid. The term "o-aromatic dicarboxylic acid" refers to an o-aromatic dicarboxylic acid, an anhydride thereof, or an ester-forming derivative thereof.

<<Isocyanate Compound with Two or More Isocyanate Groups per Molecule>>

The isocyanate compound with two or more isocyanate groups per molecule may be an aromatic compound or an aliphatic compound, or a low-molecular-weight compound or a high-molecular-weight compound, provided that they have two or more isocyanate groups per molecule. Examples thereof include diisocyanate compounds with two isocyanate groups and polyisocyanate compounds with three or more isocyanate groups. The isocyanate compound may also be a blocked isocyanate compound produced by an addition reaction using a known isocyanate blocking agent by an appropriate traditional method.

The isocyanate compound is preferably a compound having an aromatic ring in the main backbone, more preferably a compound with a polyurethane structure having an aromatic ring in the main backbone.

A polyisocyanate compound is preferred from the perspective of adhesiveness, and a polyisocyanate compound with an aromatic ring is more preferred from the perspective of gas barrier properties. An isocyanate compound with a m-xylene backbone is more preferred because not only hydrogen bonding of a urethane group but also $\pi$-$\pi$ stacking of aromatic rings can be expected to improve gas barrier properties.

More specifically, the isocyanate compound may be tetramethylene diisocyanate, hexamethylene diisocyanate, toluene diisocyanate, diphenylmethane diisocyanate, hydrogenated diphenylmethane diisocyanate, m-xylylene diisocyanate, hydrogenated xylylene diisocyanate, or isophorone diisocyanate. A trimer of these isocyanate compounds may also be used. Furthermore, an adduct, a biuret, or a allophanate produced by a reaction between an excessive amount of such an isocyanate compound and a low-molecular-weight or high-molecular-weight compound containing active hydrogen may also be used.

A low-molecular-weight compound containing active hydrogen is, for example, ethylene glycol, propylene glycol, m-xylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, m-xylylenediamine, or an alkylene oxide adduct thereof. A high-molecular-weight compound containing active hydrogen is, for example, a polyester, a polyether polyol, or a polyamide.

<Inorganic Vapor Deposition Film>

A barrier laminate according to the present disclosure includes an inorganic vapor deposition film. The inorganic vapor deposition film is preferably a layer directly formed by vapor deposition on one surface of the heat seal layer or on one surface of the anchor coat layer when the anchor coat layer is provided. The inorganic vapor deposition film is described in detail above and is not described here.

<Protective Layer>

A barrier laminate according to the present disclosure may include a protective layer on the surface of the inorganic vapor deposition film opposite the heat seal layer. This can reduce scratches on the inorganic vapor deposition film, for example. The protective layer is described in detail above and is not described here.

<Anchor Coat Layer>

A barrier laminate according to the present disclosure may further include an anchor coat layer between the heat seal layer and the inorganic vapor deposition film. The anchor coat layer can enhance the adhesion between the heat seal layer and the inorganic vapor deposition film and reduce the occurrence of separation between these layers. The anchor coat layer is, for example, in contact with the inorganic vapor deposition film on one surface thereof and in contact with the heat seal layer on the other surface thereof. The anchor coat layer is described in detail above and is not described here.

<Heat Seal Layer>

A barrier laminate according to the present disclosure includes a heat seal layer as a surface layer on one side. In one embodiment, the heat seal layer functions as a heat seal layer. The heat seal layer functions as a heat sealable sealant layer, for example, when a barrier laminate is used as a packaging material. The heat seal layer also functions as a

separation layer from the support substrate when a barrier laminate is produced by a transfer method described later. The heat seal layer is described in detail above and is not described here.

<Functional Layer>

A barrier laminate according to the present disclosure may include a functional layer in addition to the layers described above. The functional layer is a layer that provides the barrier laminate with a function, for example, a light-shielding effect, mechanical strength, resistance to deformation, impact resistance, pinhole resistance, heat resistance, sealing performance, quality preservation, workability, or hygiene.

In one embodiment, the functional layer contains a resin component. The resin component is, for example, a polyolefin, a vinyl resin, a styrene resin, a (meth)acrylic resin, polyester, a polyurethane, a polycarbonate, a polyamide, a polyimide, a fluoropolymer, a cellulose resin, or an ionomer resin.

The functional layer can contain the additive agent described above depending on the function thereof. The functional layer has a thickness of, for example, 1 μm or more and 300 μm or less.

<Layer Structure and Use of Barrier Paper>

Several examples of the layer structure of a barrier paper according to the present disclosure are described below.

- Paper substrate/adhesive layer/inorganic vapor deposition film/HS layer
- Paper substrate/adhesive layer/inorganic vapor deposition film/AC layer/HS layer
- Paper substrate/adhesive layer/protective layer/inorganic vapor deposition film/HS layer
- Paper substrate/adhesive layer/protective layer/inorganic vapor deposition film/AC layer/HS layer
- Print layer/paper substrate/adhesive layer/inorganic vapor deposition film/HS layer
- Print layer/paper substrate/adhesive layer/inorganic vapor deposition film/AC layer/HS layer
- Print layer/paper substrate/adhesive layer/protective layer/inorganic vapor deposition film/HS layer
- Print layer/paper substrate/adhesive layer/protective layer/inorganic vapor deposition film/AC layer/HS layer
- Paper substrate/adhesive layer/protective layer/protective layer/inorganic vapor deposition film/HS layer
- Paper substrate/adhesive layer/protective layer/protective layer/inorganic vapor deposition film/AC layer/HS layer
- Print layer/paper substrate/adhesive layer/protective layer/protective layer/inorganic vapor deposition film/HS layer
- Print layer/paper substrate/adhesive layer/protective layer/protective layer/inorganic vapor deposition film/AC layer/HS layer

The "HS layer" refers to a heat seal layer, the "AC layer" refers to an anchor coat layer, and the "/" refers to an interface.

The paper substrate may be a paper material/filler layer (or resin layer). In this case, for example, the portion of "paper substrate/adhesive layer" in the above layer structure is "paper material/filler layer (or resin layer)/adhesive layer". The paper substrate may be replaced with a resin film or with a substrate on which direct vapor deposition is difficult to perform (for example, wood or the like).

A barrier paper according to the present disclosure, which includes a paper substrate, has a higher paper material content and a lower plastic content than gas barrier plastic films, can therefore contribute to the reduction of plastic waste, is easily recycled or biodegradable, does not damage incinerators, and can reduce incineration residues.

The oxygen transmission rate of a barrier laminate, such as a barrier paper according to the present disclosure, is preferably 10 cc/m$^2$/24 h/atm or less, more preferably 5 cc/m$^2$/24 h/atm or less, still more preferably 3 cc/m$^2$/24 h/atm or less, particularly preferably 1.5 cc/m$^2$/24 h/atm or less. The lower limit of the oxygen transmission rate may be, for example, 0.01 cc/m$^2$/24 h/atm. The oxygen transmission rate is measured in accordance with JIS K 7126 under the conditions of

23°C and 90% RH.

The water vapor transmission rate of a barrier laminate such as a barrier paper according to the present disclosure is preferably 20 $g/m^2/24$ h or less, more preferably 10 $g/m^2/24$ h or less, still more preferably 5 $g/m^2/24$ h or less, particularly preferably 1.5 $g/m^2/24$ h or less. The lower limit of the water vapor transmission rate may be, for example, 0.01 $g/m^2/24$ h. The water vapor transmission rate is measured in accordance with JIS K 7129 under the conditions of 40°C and 90% RH.

A barrier laminate according to the present disclosure can be suitable for use in packaging materials, such as packaging bags. As described above, a barrier laminate according to the present disclosure has high interlayer adhesiveness and less delamination, and a packaging material including the barrier laminate has less delamination during use and the like.

A packaging material according to the present disclosure includes a barrier laminate according to the present disclosure. If necessary, a packaging material according to the present disclosure may further include layers with various functions in addition to the barrier laminate.

For example, a packaging material can be produced by folding the barrier laminate in half such that the substrate, such as the paper substrate, is outside and the heat seal layer is inside and by heat-sealing end portions or the like of the barrier laminate. A packaging material can also be produced by stacking a plurality of the barrier laminates such that the heat seal layers face each other and by heat-sealing end portions or the like of the barrier laminates. The packaging material may be composed entirely of the barrier laminate or may be composed partially of the barrier laminate.

The type of heat sealing of the packaging material is, for example, a side seal type, a two-sided seal type, a three-sided seal type, a four-sided seal type, an envelope seal type, a butt seal type (pillow seal type), a ribbed seal type, a flat bottom seal type, a square bottom seal type, or a gazette type. A free-standing packaging bag (standing pouch) is also possible. The heat sealing method is, for example, bar sealing, rotating roll sealing, belt sealing, impulse sealing, high-frequency sealing, or ultrasonic sealing.

The contents to be filled in a packaging material are, for example, liquids, powders, or gels or may be food or non-food products. After the contents are filled in a packaging material, an opening of the packaging material is heat-sealed to produce a package.

Specific examples of the contents include coffee beans, tea leaves; foods, such as cheese, snacks, rice confectioneries, Japanese cakes, half-dry confectioneries, nuts, vegetables, fruits, fish and meat products, fish pastes, dried foods, smoked foods, tsukudani (food boiled in soy sauce), raw rice, cooked rice, rice cakes, infant foods, jams, mayonnaise, ketchup, edible oil, dressings, sauces, spices, dairy products, and pet foods; beverages, such as beer, wine, fruit juice, green tea, and coffee; pharmaceutical agents; cosmetics, shampoos, rinses, and detergents; and metal components and electronic components.

[Method for Producing Barrier Laminate]

A barrier laminate according to the present disclosure is produced, for example, by a transfer method described below.

A method for producing a barrier laminate by the transfer method includes

the step of preparing a transfer object, such as a paper member including a paper substrate, and a transfer film according to the present disclosure (hereinafter also referred to as a "preparation step"),

the step of producing an intermediate laminate by bonding the transfer object and the transfer film together via an adhesive layer with the support substrate of the transfer film facing outward and the inorganic vapor deposition film facing inward (the transfer object side) (hereinafter also referred to as a "bonding step"), and

the step of separating the support substrate from the heat seal layer of the intermediate laminate (hereinafter also referred to as a "separation step").

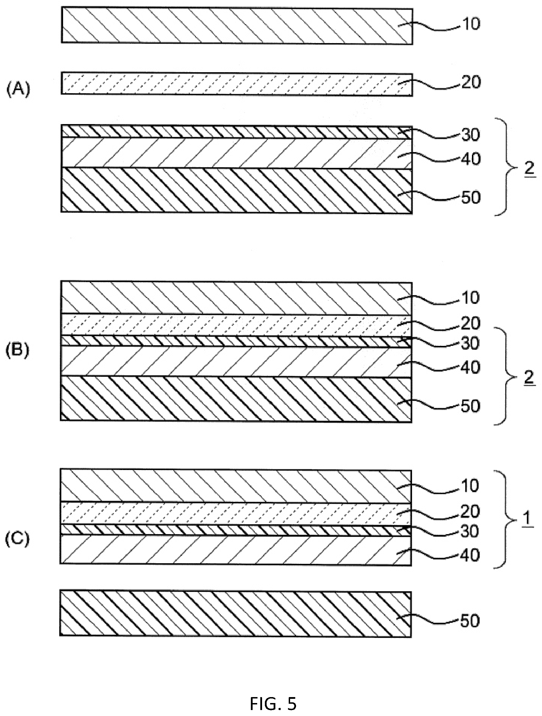

Fig. 5 is a process drawing of an example of a method for producing a barrier laminate according to the present disclosure.

In the bonding step and the separation step, a transfer layer including the inorganic vapor deposition film and the heat seal layer in this order in the thickness direction can be transferred onto the transfer object, such as a paper member. The inorganic vapor deposition film transferred onto the paper substrate by the transfer method is less contaminated, has higher adhesion between the inorganic vapor deposition film and the adhesive layer, is more uniform and stabler, and has better gas barrier properties than an inorganic vapor deposition film directly formed by vapor deposition on the paper substrate.

An inorganic vapor deposition film can be formed on a paper substrate by a production method according to the

present disclosure in the same manner as on a resin substrate, thereby producing an ecological barrier paper with good gas barrier properties.

Furthermore, for example, in a method of forming an inorganic vapor deposition film on a paper substrate and applying a coating liquid for a heat seal layer to the inorganic vapor deposition film to form a heat seal layer, cracking or thermal damage of the inorganic vapor deposition film caused by tension, drying, or the like during the formation of the heat seal layer may impair the gas barrier properties of the inorganic vapor deposition film. A production method according to the present disclosure can avoid such degradation. Furthermore, the heat seal layer can reduce the degradation of the inorganic vapor deposition film at the time of bonding in the bonding step and at the time of separation of the support substrate in the separation step.

A production method according to the present disclosure can reduce the degradation of the inorganic vapor deposition film and, therefore, can reduce the degree of degradation due to bending, breaking, and heat seal damage, for example, when the barrier laminate is used as a packaging material.

Although with a different layer structure from a barrier paper according to the present disclosure, a barrier paper (hereinafter also referred to as a "reference barrier paper") with a layer structure of paper substrate/adhesive layer/inorganic vapor deposition film/separation layer/optional primer layer/heat seal layer is also conceivable.

A method for producing the reference barrier paper is, for example, a method of bonding a paper substrate and a transfer film including a transfer substrate, a separation layer, and an inorganic vapor deposition film via an adhesive layer to form a laminate (1) with a layer structure of paper substrate/adhesive layer/inorganic vapor deposition film/separation layer/transfer substrate, separating the transfer substrate from the laminate (1) to form a laminate (2) with a layer structure of paper substrate/adhesive layer/inorganic vapor deposition film/separation layer, and forming an optional primer layer and a heat seal layer on the separation layer of the laminate (2) to produce the reference barrier paper. This production method is hereinafter also referred to as a "reference transfer method".

The reference transfer method has advantages that the inorganic vapor deposition film transferred onto the paper substrate by the transfer method is less contaminated, has higher adhesion between the inorganic vapor deposition film and the adhesive layer, is more uniform and stabler, and has better gas barrier properties than an inorganic vapor deposition film directly formed by vapor deposition on the paper substrate.

However, the reference barrier paper includes the separation layer between the heat seal layer and the inorganic vapor deposition film and may have insufficient adhesion strength between these layers. The reference transfer method has an increased number of production steps because, after the transfer substrate is separated, for example, it is necessary to separately form a heat seal layer (heat sealable sealant layer), which is necessary for producing a packaging material, on the separation layer.

In contrast, a barrier paper according to the present disclosure includes no separation layer between the heat seal layer and the inorganic vapor deposition film and therefore has sufficiently high adhesion strength between these layers. In a production method according to the present disclosure, the heat seal layer also serves as a separation layer from the support substrate and eliminates the need to separately form a heat seal layer (heat sealable sealant layer) after the support substrate is separated, thus reducing the number of production steps.

In a production method according to the present disclosure, in one embodiment, the heat seal layer and the inorganic vapor deposition film are formed in advance on the thin support substrate. In the production of a transfer film, a wider and longer transfer film than a paper substrate can be processed, and this can reduce the cost per unit area of a barrier paper.

As described above, although both the reference barrier paper and the reference transfer method have good advantages, it can be said that a barrier paper according to the present disclosure and a method for producing the barrier paper are superior to these in the above points and have advantageous effects.

<Preparation Step>

In the preparation step, an transfer object, such as a paper member, and a transfer film are prepared.

The transfer object is, for example, a paper member. The paper member includes a paper substrate. The paper member may be a single sheet or a continuous sheet wound into a roll.

The paper member may include only a paper substrate or may include a paper substrate and a print layer provided on the paper substrate. The paper member preferably includes a print layer on a surface of the paper substrate opposite the surface on which the adhesive layer is provided. In the preparation step, the paper member may be prepared by forming a print layer on the paper substrate or may be a paper member including a print layer provided in advance on the paper substrate. The print layer may be formed between the bonding step and the separation step or after the separation step but is preferably formed before the bonding step from the perspective of reducing the degradation of gas barrier properties.

The paper substrate may include only a paper material or may include a paper material and a filler layer or a resin layer formed on the paper material. A paper substrate including a filler layer or a resin layer on a paper material can be used

to suppress the penetration of an adhesive agent into the paper material and stabilize the adhesive strength of the adhesive layer. In the preparation step, the paper substrate may be prepared by forming a filler layer or a resin layer on the paper material or may be a paper substrate, such as coated paper, including a filler layer or a resin layer provided in advance on the paper material.

In addition to the formation of the print layer described above, the paper substrate may be decorated, for example, by hot stamping, embossing, shaping, or the like on a surface opposite the surface on which the adhesive layer is provided. A paper member thus produced may be used. The decoration may be performed between the bonding step and the separation step or after the separation step but is preferably performed before the bonding step from the perspective of reducing the degradation of gas barrier properties.

The details of each element are described above and are not described here.

The resin film may be used as a transfer object and as a support substrate. In addition, a substrate on which direct vapor deposition is difficult to perform (for example, wood or the like) may be used.

In the preparation step, a transfer film according to the present disclosure produced in advance is prepared.

<Bonding Step>

In the bonding step, the transfer object, such as a paper member, and the transfer film are bonded together via the adhesive layer with the support substrate of the transfer film facing outward and the inorganic vapor deposition film facing inward (the transfer object side) to produce an intermediate laminate (see Figs. 5(A) and 5(B)). In one embodiment, due to the adhesive layer provided between the paper substrate and the inorganic vapor deposition film, the inorganic vapor deposition film can be securely bonded to even a rough surface of the paper substrate.

In the bonding step, the adhesive layer may be formed on either the transfer object or the transfer film or may be formed on both the transfer object and the transfer film, or an adhesive agent may be supplied between the transfer object and the transfer film to simultaneously perform the formation of the adhesive layer and the adhesion between the transfer object and the transfer film.

In the bonding step, in one embodiment, the adhesive layer is formed on the transfer object, and the transfer film is bonded to the adhesive layer. In one embodiment, the adhesive layer is preferably formed on a filler layer or a resin layer of the paper member.

In the bonding step, in one embodiment, the adhesive layer is formed on the transfer film, and the transfer object is bonded to the adhesive layer. The adhesive layer is formed on a surface of the transfer film opposite the support substrate. In one embodiment, the adhesive layer is preferably formed on the inorganic vapor deposition film of the transfer film.

In the bonding step, in one embodiment, the adhesive layer is formed on the transfer object, the adhesive layer is formed on the transfer film, and the transfer object and the transfer film are bonded together with the adhesive layers being in contact with each other.

A specific method of forming the adhesive layer is, for example, a method of forming a coating layer by applying a liquid adhesive agent composition, a dry lamination method using a dry lamination adhesive agent, or a non-solvent lamination method using a non-solvent adhesive agent.

To improve the adhesiveness of the adhesive layer, an anchor coat layer may be formed before the formation of the adhesive layer, and then the adhesive layer may be formed. An anchor coating layer is preferably formed by application and drying.

The bonding step can be performed using a known typical apparatus, temperature, and pressure depending on the type and characteristics of the adhesive agent and the method of forming the adhesive layer. For example, when the adhesive layer is formed by a dry lamination method, in one embodiment, the adhesive layer is formed by applying a dry lamination adhesive agent to the transfer object and/or the transfer film and drying the dry lamination adhesive agent, and the transfer object and the transfer film are stacked via the adhesive layer and are then pressurized to produce an intermediate laminate. It may be heated if necessary.

The pressurization method and the pressure of the intermediate laminate in the bonding step are preferably selected and set so as not to damage the inorganic vapor deposition film as much as possible. The pressure at the time of pressurization is preferably 0.1 MPa or more and 10 MPa or less. For example, the adhesive layer may be softened by heating and then bonded. Depending on the composition of the adhesive agent, the adhesive layer may be cured by heating after bonding.

<Separation Step>

In the separation step, the support substrate is separated from the heat seal layer of the intermediate laminate (see Fig. 5(C)). For example, after the adhesive layer between the transfer object and the transfer film exhibits sufficient adhesive strength, the support substrate is separated from the intermediate laminate. The separation can be performed by a known apparatus at a known temperature depending on the type and characteristics of the adhesive layer and the

method of forming the adhesive layer.

In one embodiment, the support substrate of the transfer film may be separated while the transfer object and the transfer film are bonded together via the adhesive layer. In this manner, a barrier laminate, such as a barrier paper according to the present disclosure, is produced.

For example, when the intermediate laminate is a continuous sheet wound into a roll, the support substrate may be continuously separated from the heat seal layer of the intermediate laminate using a release roll, and each of the barrier laminate and the support substrate may be wound up.

The present disclosure relates to, for example, the following [1] to [19]:

[1] A transfer film including: a support substrate; a heat seal layer; and an inorganic vapor deposition film in this order in a thickness direction, wherein the inorganic vapor deposition film is in contact with the heat seal layer, or the transfer film further includes an anchor coat layer between the inorganic vapor deposition film and the heat seal layer, and the inorganic vapor deposition film is in contact with the anchor coat layer.

[2] The transfer film according to [1], wherein the inorganic vapor deposition film is directly formed by vapor deposition on one surface of the heat seal layer.

[3] The transfer film according to [1], wherein the inorganic vapor deposition film is directly formed by vapor deposition on one surface of the anchor coat layer.

[4] The transfer film according to any one of [1] to [3], further including a protective layer on the inorganic vapor deposition film.

[5] The transfer film according to any one of [1] to [4], wherein the inorganic vapor deposition film contains at least one selected from aluminum, aluminum oxide, and silicon oxide.

[6] The transfer film according to any one of [1] to [5], wherein the heat seal layer has an indentation hardness of 0.15 GPa or less determined by a nanoindentation method and a composite modulus of 2.0 GPa or less.

[7] The transfer film according to any one of [1] to [6], wherein the anchor coat layer has a transition point of 90°C or more and 140°C or less measured by local thermal analysis using a thermal probe.

[8] The transfer film according to any one of [1] to [7], wherein normalized intensity of $NO_2^-$ ion in the anchor coat layer measured by time-of-flight secondary ion mass spectrometry (TOF-SIMS) while etching the transfer film is 3.0 or more and 4.2 or less.
[the normalized intensity means a common logarithm value of an average value of detected intensity of $NO_2^-$ ion measured by TOF-SIMS normalized by dividing the detected intensity of $NO_2^-$ ion by detected intensity of $CN^-$ ion and multiplying 100,000 times]

[9] A barrier laminate including: a substrate; an adhesive layer; an inorganic vapor deposition film; and a heat seal layer in this order in the thickness direction, wherein the inorganic vapor deposition film is in contact with the heat seal layer, or the barrier laminate further includes an anchor coat layer between the inorganic vapor deposition film and the heat seal layer, and the inorganic vapor deposition film is in contact with the anchor coat layer.

[10] The barrier laminate according to [9], wherein the inorganic vapor deposition film is directly formed by vapor deposition on one surface of the heat seal layer.

[11] The barrier laminate according to [9], wherein the inorganic vapor deposition film is directly formed by vapor deposition on one surface of the anchor coat layer.

[12] A barrier laminate including: a substrate; an adhesive layer; an inorganic vapor deposition film; and a heat seal layer in this order in the thickness direction, wherein no separation layer is present between the inorganic vapor deposition film and the heat seal layer.

[13] The barrier laminate according to [12], further including an anchor coat layer between the inorganic vapor deposition film and the heat seal layer.

[14] The barrier laminate according to any one of [9] to [13], wherein the inorganic vapor deposition film contains at

least one selected from aluminum, aluminum oxide, and silicon oxide.

[15] The barrier laminate according to any one of [9] to [14], wherein the substrate is a paper substrate.

[16] The barrier laminate according to [15], wherein the paper substrate includes: a paper material; and a filler layer or a resin layer formed on a surface of the paper material on an adhesive layer side.

[17] A barrier laminate including: a paper substrate; an adhesive layer; an inorganic vapor deposition film; and a heat seal layer in this order in the thickness direction, wherein the inorganic vapor deposition film is in contact with the heat seal layer, or the barrier laminate further includes an anchor coat layer between the inorganic vapor deposition film and the heat seal layer, and the inorganic vapor deposition film is in contact with the anchor coat layer, and the paper substrate is made of a paper material and does not include any of a filler layer, a resin layer, and a clay coating layer.

[18] The barrier laminate according to any one of [9] to [17], further including a print layer on a surface of the substrate opposite the adhesive layer side.

[19] The barrier laminate according to any one of [9] to [18], wherein the adhesive layer has a thickness of 0.5 μm or more and 20 μm or less.

EXAMPLES

A transfer film, a barrier laminate, and the like according to the present disclosure will be described in more detail below on the basis of the following examples, but a transfer film and a barrier laminate according to the present disclosure are not limited to these examples.

Main products used in the examples are described below.

[Paper Substrate]

- Paper substrate A: manufactured by Daio Paper Corporation, Ryuo coat, single sheet, basis weight 55 g/m$^2$, one-side coated product.

- Paper substrate B: manufactured by Daio Paper Corporation, Ryuo coat, single sheet, basis weight 80 g/m$^2$, one-side coated product.

- Paper substrate C: manufactured by Daio Paper Corporation, Nagoya Sarashi Ryuo, single sheet, basis weight 50 g/m$^2$, one-side glazed product.

[Adhesive Agent]

- Adhesive agent A: manufactured by Rock Paint Co., Ltd., dry lamination adhesive agent, RU-40/H-1 = 15/2 mass ratio, bonding by the dry lamination method when used.

- Adhesive agent B: manufactured by Rock Paint Co., Ltd., dry lamination adhesive agent, RU-77T/H-7 = 10/1 mass ratio, bonding by the dry lamination method when used.

[EXAMPLES]

[Example 1A: Production of Transfer Film A]

A coating liquid for a heat seal layer with the following composition was applied to a non-corona-treated surface of a PET film (manufactured by Toyobo Co., Ltd., thickness: 12 μm, one-side corona-treated product) by a gravure coating method and was dried to form a heat seal layer with a thickness of 5 μm. A polyester (manufactured by Toyobo Co., Ltd., trade name: Vylon (registered trademark) UR1700) as a main agent, an XDI isocyanate (manufactured by Mitsui Chemicals, Inc., trade name: Takenate D110N) as a curing agent, and nitrocellulose as an additive agent were mixed

at a ratio of main agent:curing agent:nitrocellulose (solid mass ratio) = 1:1:1 to prepare an anchor coating agent. The anchor coating agent was applied to the heat seal layer by a gravure coating method and was dried to form an anchor coat layer with a thickness of 500 nm. An aluminum vapor deposition film with a thickness of 45 nm was formed on the anchor coat layer as an inorganic vapor deposition film by a physical vapor deposition method. A coating liquid for a protective layer containing a urethane resin and a silane coupling agent was applied to the aluminum vapor deposition film by a gravure coating method and was dried to form a protective layer with a thickness of 750 nm. In this manner, a transfer film A with a layer structure of PET film/heat seal layer/anchor coat layer/aluminum vapor deposition film/protective layer was produced.

(Coating Liquid for Heat Seal Layer)

- Chemipearl (registered trademark) S120 (Mitsui Chemicals, Inc., aqueous ionomer emulsion, composition: metal salt of ethylene-methacrylic acid copolymer, self-emulsifying emulsion)

[Example 1B: Production of Transfer Film B]

A transfer film B with a layer structure of PET film/heat seal layer/anchor coat layer/aluminum oxide vapor deposition film/protective layer was produced in the same manner as in the production of the transfer film A except that an aluminum oxide vapor deposition film with a thickness of 20 nm was formed as an inorganic vapor deposition film.

[Example 1C: Production of Transfer Film C]

A transfer film C with a layer structure of PET film/heat seal layer/anchor coat layer/silicon oxide vapor deposition film/protective layer was produced in the same manner as in the production of the transfer film A except that a silicon oxide vapor deposition film with a thickness of 35 nm was formed as an inorganic vapor deposition film by a physical vapor deposition method.

[Example 1]

An adhesive agent A was applied to a coated surface of a paper substrate A (A4 size) such that the basis weight after drying was 3.0 g/m$^2$, and was dried to form an adhesive agent A layer.

A surface of the adhesive agent A layer of the paper substrate A and the protective layer surface of the transfer film A (A4 size) were placed opposite each other, were bonded together, and were pressurized at 0.5 MPa, and were then subjected to aging at 40°C for 3 days. In this manner, an intermediate laminate with a layer structure of paper substrate A [paper material/coating layer]/adhesive agent A layer/protective layer/aluminum vapor deposition film/anchor coat layer/heat seal layer/PET film was produced. The PET film of the intermediate laminate was separated to produce a barrier paper.

[Examples 2 to 6]

Barrier papers were produced in the same manner as in Example 1 except that the type of paper substrate, the type of adhesive agent, and the transfer film were changed as described in Table 1.

[Reference Example]

[Reference Example 1A: Production of Reference transfer film A]

A diluted separating agent solution (a mixture of a separating agent k-45-3 manufactured by Showa Ink Manufacturing Co., Ltd.:ethyl acetate = 1:1 mass ratio) was applied by a bar coating method to a corona-treated surface of a PET film (manufactured by Toyobo Co., Ltd., thickness: 12 μm, one-side corona-treated product) such that the basis weight after drying was 1.0 g/m$^2$, and was dried in an oven at 80°C for 1 minute to form a separation layer, thereby producing a separation substrate including the PET film and the separation layer. An aluminum vapor deposition film with a thickness of 45 nm was formed on the separation layer as an inorganic vapor deposition film by a physical vapor deposition method. A coating liquid for a protective layer containing a urethane resin and a silane coupling agent was applied to the aluminum vapor deposition film by a gravure coating method and was dried to form a protective layer with a thickness of 750 nm. In this manner, a reference transfer film A with a layer structure of PET film/separation layer/aluminum vapor

deposition film/protective layer was produced.

[Reference Example 1B: Production of Reference transfer film B]

A reference transfer film B with a layer structure of PET film/separation layer/aluminum oxide vapor deposition film/protective layer was produced in the same manner as in the production of the reference transfer film A except that an aluminum oxide vapor deposition film with a thickness of 20 nm was formed as an inorganic vapor deposition film.

[Reference Example 1C: Production of Reference transfer film C]

A reference transfer film C with a layer structure of PET film/separation layer/silicon oxide vapor deposition film/protective layer was produced in the same manner as in the production of the reference transfer film A except that a silicon oxide vapor deposition film with a thickness of 35 nm was formed as an inorganic vapor deposition film by a physical vapor deposition method.

[Reference Example 1]

The adhesive agent A was applied to the coated surface of the paper substrate A (A4 size) such that the basis weight after drying was 3.0 g/m$^2$, and was dried to form the adhesive agent A layer. A surface of the adhesive agent A layer of the reference paper substrate A and the protective layer surface of the transfer film A (A4 size) were placed opposite each other, were bonded together, and were pressurized at 0.5 MPa, and were then subjected to aging at 40°C for 3 days. In this manner, a laminate with a layer structure of paper substrate A [paper material/coating layer]/adhesive agent A layer/protective layer/aluminum vapor deposition film/separation layer/PET film was produced.

The PET film of the laminate was separated, and a coating liquid for a primer layer was applied to the separation layer and was dried to form the primer layer. The coating liquid for the heat seal layer with the above composition was applied to the primer layer and was dried to form a heat seal layer with a thickness of 5 μm. In the same manner as described above, a reference barrier paper was produced.

[Reference Examples 2 to 6]

Reference barrier papers were produced in the same manner as in Reference Example 1 except that the type of paper substrate, the type of adhesive agent, and the reference transfer film were changed as described in Table 2.

[Evaluation 1]

<Adhesiveness>

A two-component polyurethane adhesive agent was applied to an unstretched polypropylene film with a thickness of 70 μm, was dried, and was then dry-laminated with a stretched nylon film with a thickness of 15 μm to produce a laminated film. A two-component polyurethane adhesive agent was applied to a heat seal layer of a barrier paper or a reference barrier paper, was dried, and was then dry-laminated with a laminated film to produce a laminated composite film.

The laminated composite film was aged for 48 hours and was then cut into a strip with a width of 15 mm to prepare a test specimen. The adhesion strength (peel strength) of the test specimen was measured with a tensile tester ([model name: Tensilon universal testing machine] manufactured by Orientec Co., Ltd.) in accordance with JIS K 6854-2.

In the measurement, the polypropylene film side and the (reference) barrier paper side, which had been separated in advance for the measurement, were held with a grip of the measuring instrument and were pulled at a speed of 50 mm/min in opposite directions (180-degree separation: T peel method) perpendicular to the surface direction of a portion where the polypropylene film and the (reference) barrier paper were still laminated, thereby measuring the average value of tensile stress in the stable region to obtain adhesion strength (N/15 mm). (Reference) barrier papers were rated in accordance with the following evaluation criteria.

<Evaluation Criteria>

- AA: High adhesion strength; suitable for actual applications, such as packaging materials.

- BB: Moderate adhesion strength; there is no problem in actual applications, such as packaging materials.
- CC: Very low adhesion strength; it is difficult to apply to actual applications, such as packaging materials.

[Table 1]

| | | Unit | Ex. 1 | Ex. 2 | Ex. 3 | Ex. 4 | Ex. 5 | Ex. 6 |
|---|---|---|---|---|---|---|---|---|
| Paper substrate | Paper substrate A | Basis weight g/m$^2$ | 55 | | | 55 | 55 | 55 |
| | Paper substrate B | Basis weight g/m$^2$ | | 80 | | | | |
| | Paper substrate C | Basis weight g/m$^2$ | | | 50 | | | |
| Adhesive layer | Adhesive agent A | g/m$^2$ | 3.0 | 3.0 | 3.0 | 3.0 | 3.0 | |
| | Adhesive agent B | g/m$^2$ | | | | | | 3.0 |
| Protective layer | | | Present | Present | Present | Present | Present | Present |
| Inorganic vapor deposition film | Aluminum | nm | 45 | 45 | 45 | | | |
| | Aluminum oxide | nm | | | | 20 | | |
| | Silicon oxide | nm | | | | | 35 | |
| Anchor coat layer | | | Present | Present | Present | Present | Present | Present |
| Heat seal layer | | | Present | Present | Present | Present | Present | Present |
| Evaluation | Adhesiveness | | AA | AA | AA | AA | AA | AA |

[Table 2]

| | | Unit | Ref. Ex. 1 | Ref. Ex. 2 | Ref. Ex. 3 | Ref. Ex. 4 | Ref. Ex. 5 | Ref. Ex. 6 |
|---|---|---|---|---|---|---|---|---|
| Paper substrate | Paper substrate A | Basis weight g/m$^2$ | 55 | | | 55 | 55 | 55 |
| | Paper substrate B | Basis weight g/m$^2$ | | 80 | | | | |
| | Paper substrate C | Basis weight g/m$^2$ | | | 50 | | | |
| Adhesive layer | Adhesive agent A | g/m$^2$ | 3.0 | 3.0 | 3.0 | 3.0 | 3.0 | |
| | Adhesive agent B | g/m$^2$ | | | | | | 3.0 |
| Protective layer | | | Present | Present | Present | Present | Present | Present |
| Inorganic vapor | Aluminum | nm | 45 | 45 | 45 | | | |

(continued)

| | | Unit | Ref. Ex. 1 | Ref. Ex. 2 | Ref. Ex. 3 | Ref. Ex. 4 | Ref. Ex. 5 | Ref. Ex. 6 |
|---|---|---|---|---|---|---|---|---|
| deposition film | Aluminum oxide | nm | | | | 20 | | |
| | Silicon oxide | nm | | | | | 35 | |
| Separation layer | | | Present | Present | Present | Present | Present | Present |
| Primer layer | | | Present | Present | Present | Present | Present | Present |
| Heat seal layer | | | Present | Present | Present | Present | Present | Present |
| Evaluation | Adhesiveness | | BB | BB | BB | BB | BB | BB |

The barrier paper produced in the examples had no separation layer between the inorganic vapor deposition film and the heat seal layer and therefore had higher interlayer adhesiveness than the reference barrier paper with the separation layer between the inorganic vapor deposition film and the heat seal layer.

[Test Example 1A]

A transfer film with a layer structure of PET film/heat seal layer/anchor coat layer/aluminum vapor deposition film (thickness: 40 nm)/protective layer was produced in the same manner as in Example 1A. This transfer film was used to produce a barrier paper with a layer structure of heat seal layer/anchor coat layer/aluminum vapor deposition film (thickness: 40 nm)/protective layer/adhesive layer/paper (general paper) in the same manner as in Example 1.

[Test Example 2A]

A reference transfer film with a layer structure of PET film/polyester separation layer/anchor coat layer/aluminum vapor deposition film (thickness: 40 nm)/protective layer and a reference barrier paper with a layer structure of polyester separation layer/anchor coat layer/aluminum vapor deposition film (thickness: 40 nm)/protective layer/adhesive layer/-paper (general paper) were produced in the same manner as in Test Example 1A except that a separation layer was formed using a polyester separating agent instead of forming a heat seal layer using Chemipearl (registered trademark) S120.

[Test Example 3A]

A reference transfer film with a layer structure of a PET film/polycarbonate separation layer/anchor coat layer/aluminum vapor deposition film (thickness: 40 nm)/protective layer and a reference barrier paper with a layer structure of a polycarbonate separation layer/anchor coat layer/aluminum vapor deposition film (thickness: 40 nm)/protective layer/adhesive layer/paper (general paper) were produced in the same manner as in Test Example 1A except that a separation layer was formed using a polycarbonate separating agent instead of forming a heat seal layer using Chemipearl (registered trademark) S120.

[Evaluation 2]

<Measurement of Indentation Hardness and Composite Modulus>

In the transfer film of Test Example 1A and the reference transfer films of Test Examples 2A to 3A, the indentation hardness ($H_{IT}$) and the composite modulus ($E_r$) of a cross section of the heat seal layer or the separation layer as a measurement surface were determined by a nanoindentation method using a nanoindenter ("TI950 TriboIndenter" manufactured by Bruker). A Berkovich indenter (a triangular pyramid indenter; Berkovich_TI0039) was used for measurement as an indenter of the nanoindenter. The measurement was performed at 10 or more points in a cross section, and the indentation hardness $H_{IT}$ and the composite modulus $E_r$ were described as the arithmetic mean of reproducibly measured values at 10 points.

For measurement conditions, an indentation depth control system (indentation depth: 100 nm constant, loading: 10 seconds/holding: 5 seconds/unloading: 10 seconds) was adopted. The measurement conditions were more specifically described below. The indenter was pressed over 10 seconds into the heat seal layer or the separation layer from a cross section of the heat seal layer or the separation layer to an indentation depth of 100 nm, and was held in this state for 5

seconds. The load was then removed over 10 seconds. Thus, the maximum load $P_{max}$, the projected contact area $A_p$ at the maximum depth, and a load-deflection curve were obtained, and the indentation hardness and the composite modulus were calculated from the load-deflection curve. The measurement was performed at room temperature (23°C). The indenter was pushed into a portion near the central portion of the heat seal layer or the separation layer in the thickness direction in a portion where the cross section of the heat seal layer or the separation layer was exposed. The cross section is obtained by cutting in the thickness direction perpendicular to the main surface of the (reference) transfer film. The cross section was prepared by preparing a block in which the (reference) transfer film was embedded with an embedding resin, and cutting the block in a room temperature (23°C) environment using a commercially available rotary microtome. Finishing was performed with a diamond knife. The thickness of each layer can also be measured by observing the cross section.

<Evaluation of Gas Barrier Properties>

The barrier paper of Test Example 1A and the reference barrier papers of Test Examples 2A and 3A were cut to prepare test specimens. The oxygen transmission rate (cc/m$^2$/24 h/atm) and the water vapor transmission rate (g/m$^2$/24 h) of the test specimens were measured by the following method. These physical properties were also measured in a test specimen in which the (reference) barrier paper was folded into four and was then returned to the original state.

While the paper substrate side of the test specimen was set to be the oxygen supply side, the oxygen transmission rate (OTR; unit: cc/m$^2$/24 h/atm) in an environment of 23°C and 90% RH was measured with an oxygen transmission rate measuring apparatus (OX-TRAN2/20 manufactured by MOCON) in accordance with JIS K 7126. OTR of 1.5 or less was rated AA, OTR of more than 1.5 and 3.0 or less was rated BB, and OTR of more than 3.0 was rated CC.

While the paper substrate side of the test specimen was set to be the water vapor supply side, the water vapor transmission rate (WVTR; unit: g/m$^2$/24 h) in an environment of 40°C and 90% RH was measured with a water vapor transmission rate measuring apparatus (PERMATRAN-w 3/33 manufactured by MOCON) in accordance with JIS K 7129. WVTR of 1.5 or less was rated AA, WVTR of more than 1.5 and 5.0 or less was rated BB, and WVTR of more than 5.0 was rated CC.

[Table 3]

| | Nanoindentation method Results | | Gas barrier properties | | Gas barrier properties (after folded into four) | |
|---|---|---|---|---|---|---|
| | $H_{IT}$ [GPa] | $E_r$ [GPa] | OTR | WVTR | OTR | WVTR |
| Test Example 1A | 0.05 | 0.6 | AA | AA | BB | AA |
| Test Example 2A | 0.18 | 3.0 | BB | CC | CC | CC |
| Test Example 3A | 0.28 | 3.8 | BB | CC | CC | CC |

[Test Example 1B]

A transfer film with a layer structure of PET film/heat seal layer/anchor coat layer/silicon oxide vapor deposition film/protective layer was produced in the same manner as in Example 1C. However, the nitrocellulose content of the anchor coating agent was changed to 0 parts by mass per 100 parts by mass of the total amount of the main agent and the curing agent.

[Test Examples 2B to 4B]

Transfer films were produced in the same manner as in Test Example 1B except that the nitrocellulose content of the anchor coating agent was changed to 5 parts by mass (Test Example 2B), 50 parts by mass (Test Example 3B), and 200 parts by mass (Test Example 4B) per 100 parts by mass of the total amount of the main agent and the curing agent.

[Evaluation 3]

<Measurement of Transition Point>

In the same manner as in <Measurement of Indentation Hardness and Composite Modulus>, a block was prepared by embedding the transfer film in an embedding resin, and the block was cut in a room temperature (23°C) environment using a commercially available rotary microtome to prepare a cross section of the transfer film. Finishing was

performed with a diamond knife.

A nanoTA manufactured by Anasys Instruments was used as a measuring apparatus, and PREX-AN2-300-5 manufactured by Anasys Instruments was used as a thermal probe.

The following calibration was performed before measurement.

nanoTA Calibration Samples manufactured by Bruker were prepared as standard samples. Polycaprolactone (softening point: 55°C), polyethylene (softening point: 116°C), and poly(ethylene terephthalate) (softening point: 235°C), which have known softening points, are placed on the stand of the standard sample. The surface of each standard sample in contact with a thermal probe was heated. During heating, the thermal expansion directly under the thermal probe was measured to obtain a graph showing the deflection against the voltage. The measurement conditions set in the apparatus were as follows:

Measurement start temperature: 0.1 V

Measurement end temperature: 10 V

Heating rate: 0.2 V/s

Using the softening point of each standard sample, a graph showing the deflection of the thermal probe against the voltage was converted into a graph showing the deflection against the temperature. The calibration was performed as described above.

After the calibration, the transition point of the anchor coat layer was measured. The transition point was measured at a portion near the central portion of the anchor coat layer in the thickness direction in a portion where a cross section of the anchor coat layer was exposed. The measurement was performed at five or more points in a cross section, and the transition point was described as the arithmetic mean of reproducibly measured values at five points.

In the measurement, the thermal probe was brought into contact with the cross section of the anchor coat layer, heating was performed under the following conditions while the thermal probe was brought into contact with the cross section, and a graph (thermal expansion curve) showing the deflection of the thermal probe against the temperature was obtained.

Measurement start temperature: 40°C
Measurement end temperature: 350°C
Heating rate: 5°C/sec

In the thermal expansion curve, the transition point at the lowest temperature was obtained.

When a peak of the thermal expansion curve was obtained, the temperature of the peak of the thermal expansion curve was defined as the transition point. The thermal expansion curve was considered to have a peak when a continuous decrease in deflection of 0.2 V or more from the highest deflection of the thermal expansion curve was measured.

When no peak of the thermal expansion curve was obtained and a "shoulder peak" was obtained, or when a "shoulder peak" was observed at a temperature lower than the temperature at which a peak was obtained, the temperature of the "shoulder peak" was regarded as the transition point. A "shoulder peak" is defined as a point that does not have a clear convex shape and at which the slope (deflection/temperature) of the thermal expansion curve changes and decreases to near 0. More specifically, when the absolute value of the slope (= $slope_A$) in the tangent line on the lower temperature side where the slope of the thermal expansion curve changed and the absolute value of the slope (= $slope_B$) in the tangent line on the higher temperature side where the slope of the thermal expansion curve changed satisfied the relationships ($slope_A$) > {($slope_B$) x 5} and ($slope_B$) ≤ 0.02 V/°C, the thermal expansion curve was considered to have a "shoulder peak". The tangent line was drawn at a portion where the thermal expansion curve was close to a relatively stable straight line. In the thermal expansion curve considered to have a "shoulder peak", the temperature at a point of intersection of tangent lines drawn before and after the slope of the thermal expansion curve changed was taken as a transition point.

<TOF-SIMS Measurement>

The normalized intensity of $NO_2^-$ ion in the anchor coat layer was measured by time-of-flight secondary ion mass spectrometry (TOF-SIMS). More specifically, using a time-of-flight secondary ion mass spectrometer (TOF.SIMS5 manufactured by ION TOF), soft etching was repeated at a constant rate from the surface of the protective layer of the transfer film to the PET film side with a Cs (cesium) ion gun to perform the mass spectrometry of various ions in each layer. In the anchor coat layer, the mass spectrometry of a $CN^-$ ion (mass number: 26.002) derived from a resin component and a $NO_2^-$ ion (mass number: 45.992) derived from nitrocellulose were performed.

Specific measurement conditions of TOF-SIMS are as follows:

- Primary ion type: $Bi3^{++}$ (0.2 pA, 100 μs)
- Measurement area: 150 x 150 $\mu m^2$
- Type of etching gun: Cs (1 keV, 60 nA)
- Etching area: 600 x 600 $\mu m^2$
- Etch rate: 10 s/Cycle
- Evacuation time: 15 hours or more at 1 x $10^{-6}$ mbar or less
- The TOF-SIMS measurement was performed within 30 hours after the start of evacuation.

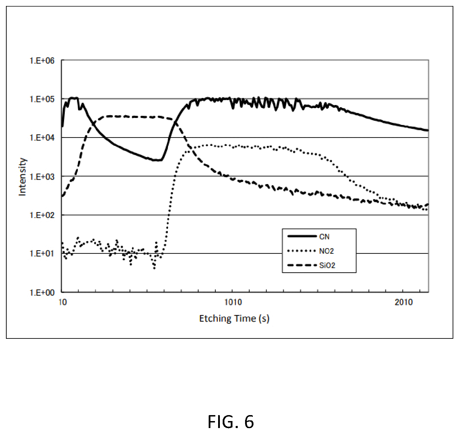

Fig. 6 shows an example of the TOF-SIMS measurement before the normalization based on the detected intensity of $CN^-$ ion. For the sake of simplicity, Fig. 6 shows only the detected intensities of $CN^-$ion, $NO_2^-$ ion, and $SiO_2$. The unit (intensity) on the vertical axis of the graph indicates the intensity of detected ions, and the unit (s) on the horizontal axis indicates the etching time.

<Evaluation of Gas Barrier Properties>

Using the transfer films of Test Examples 1B to 4B, a barrier paper with a layer structure of heat seal layer/anchor coat layer/silicon oxide vapor deposition film/protective layer/adhesive layer/paper (general paper) was produced in the same manner as in Example 1. The barrier paper was cut out to prepare a test specimen. The oxygen transmission rate (cc/$m^2$/24 h/atm) and the water vapor transmission rate (g/$m^2$/24 h) of the test specimen were measured by the method described above.
OTR of 1.5 or less was rated AA, OTR of more than 1.5 and 3.0 or less was rated BB, and OTR of more than 3.0 was rated CC. WVTR of 0.6 or less was rated SSS, WVTR of more than 0.6 and 1.0 or less was rated SS, and WVTR of more than 1.0 was rated S.

<Appearance Evaluation>

The appearance at the time of the formation of the anchor coat layer was visually evaluated.

- AA: Good
- BB: There is a partial blocking mark.
- CC: The film is partially peeled off.

[Table 4]

| | Transition point (°C) | Normalized intensity of $NO_2^-$ ion | WVTR | OTR | Appearance |
|---|---|---|---|---|---|
| Test Example 1B | 86 | 1.1 | S | CC | BB |
| Test Example 2B | 88 | 2.4 | S | BB | BB |
| Test Example 3B | 112 | 3.8 | SSS | AA | AA |
| Test Example 4B | 129 | 4.3 | S | CC | CC |

The barrier papers of Test Examples 1B, 2B, and 4B had WVTR and OTR that were not problematic in actual use. The barrier paper of Test Example 3B had higher WVTR and OTR than the barrier papers of Test Examples 1B, 2B, and 4B. The anchor coat layers in Test Examples 1B, 2B, and 4B had an appearance that was not problematic in actual use. The anchor coat layer in Test Example 3B had a better appearance than the anchor coat layers in Test Examples 1B, 2B, and 4B.
Those skilled in the art will appreciate that a transfer film, a barrier laminate, and the like according to the present disclosure are not limited to these examples, the examples and the description only illustrate the principles of the present

disclosure, various modifications and improvements may be made without departing from the gist and scope of the present disclosure, and all the modifications and improvements fall within the scope of the present disclosure for which protection is sought. Furthermore, the scope for which protection is sought by the present disclosure includes not only the claims but also equivalents thereof.

Reference Signs List

1 barrier laminate

2 transfer film

10 substrate

12 print layer

20 adhesive layer

30 inorganic vapor deposition film

32 anchor coat layer

40 heat seal layer

50 support substrate (transfer substrate)

Further, the present invention relates to the following Items 1 to 19:

[Item 1]
A transfer film comprising:

a support substrate;

a heat seal layer; and

an inorganic vapor deposition film in this order in a thickness direction,

wherein the inorganic vapor deposition film is in contact with the heat seal layer, or

the transfer film further includes an anchor coat layer between the inorganic vapor deposition film and the heat seal layer, and the inorganic vapor deposition film is in contact with the anchor coat layer.

[Item 2]
The transfer film according to item 1, wherein the inorganic vapor deposition film is directly formed by vapor deposition on one surface of the heat seal layer.

[Item 3]
The transfer film according to item 1, wherein the inorganic vapor deposition film is directly formed by vapor deposition on one surface of the anchor coat layer.

[Item 4]
The transfer film according to any one of items 1 to 3, further comprising a protective layer on the inorganic vapor deposition film.

[Item 5]
The transfer film according to any one of items 1 to 4, wherein the inorganic vapor deposition film contains at least one selected from aluminum, aluminum oxide, and silicon oxide.

[Item 6]
The transfer film according to any one of items 1 to 5, wherein the heat seal layer has an indentation hardness of 0.15 GPa or less determined by a nanoindentation method and a composite modulus of 2.0 GPa or less.

[Item 7]
The transfer film according to any one of items 1 to 6, wherein the anchor coat layer has a transition point of 90°C or more and 140°C or less measured by local thermal analysis using a thermal probe.

[Item 8]
The transfer film according to any one of items 1 to 7, wherein normalized intensity of $NO_2^-$ ion in the anchor coat layer measured by time-of-flight secondary ion mass spectrometry (TOF-SIMS) while etching the transfer film is 3.0 or more and 4.2 or less.
[the normalized intensity means a common logarithm value of an average value of detected intensity of $NO_2^-$ ion measured by TOF-SIMS normalized by dividing the detected intensity of $NO_2^-$ ion by detected intensity of $CN^-$ ion and multiplying 100,000 times]

[Item 9]
A barrier laminate comprising:

a substrate;

an adhesive layer;

an inorganic vapor deposition film; and

a heat seal layer in this order in the thickness direction,

wherein the inorganic vapor deposition film is in contact with the heat seal layer, or

the barrier laminate further includes an anchor coat layer between the inorganic vapor deposition film and the heat seal layer, and the inorganic vapor deposition film is in contact with the anchor coat layer.

[Item 10]
The barrier laminate according to item 9, wherein the inorganic vapor deposition film is directly formed by vapor deposition on one surface of the heat seal layer.

[Item 11]
The barrier laminate according to item 9, wherein the inorganic vapor deposition film is directly formed by vapor deposition on one surface of the anchor coat layer.

[Item 12]
A barrier laminate comprising: a substrate; an adhesive layer; an inorganic vapor deposition film; and a heat seal layer in this order in the thickness direction, wherein no separation layer is present between the inorganic vapor deposition film and the heat seal layer.

[Item 13]
The barrier laminate according to item 12, further comprising an anchor coat layer between the inorganic vapor deposition film and the heat seal layer.

[Item 14]
The barrier laminate according to any one of items 9 to 13, wherein the inorganic vapor deposition film contains at least one selected from aluminum, aluminum oxide, and silicon oxide.

[Item 15]
The barrier laminate according to any one of items 9 to 14, wherein the substrate is a paper substrate.

[Item 16]
The barrier laminate according to item 15, wherein the paper substrate includes: a paper material; and a filler layer or a

resin layer formed on a surface of the paper material on an adhesive layer side.

[Item 17]
A barrier laminate comprising:

a paper substrate;

an adhesive layer;

an inorganic vapor deposition film; and

a heat seal layer in this order in the thickness direction,

wherein the inorganic vapor deposition film is in contact with the heat seal layer, or

the barrier laminate further includes an anchor coat layer between the inorganic vapor deposition film and the heat seal layer, and the inorganic vapor deposition film is in contact with the anchor coat layer, and

the paper substrate is made of a paper material and does not include any of a filler layer, a resin layer, and a clay coating layer.

[Item 18]
The barrier laminate according to any one of items 9 to 17, further comprising a print layer on a surface of the substrate opposite the adhesive layer side.

[Item 19]
The barrier laminate according to any one of items 9 to 18, wherein the adhesive layer has a thickness of 0.5 μm or more and 20 μm or less.

## Claims

1. A barrier laminate comprising:

a substrate;
an adhesive layer;
an inorganic vapor deposition film; and
a heat seal layer in this order in the thickness direction,
wherein the substrate is a resin film, and
wherein the inorganic vapor deposition film is in contact with the heat seal layer, or
the barrier laminate further includes an anchor coat layer between the inorganic vapor deposition film and the heat seal layer, and the inorganic vapor deposition film is in contact with the anchor coat layer.

2. The barrier laminate according to claim 1, wherein the inorganic vapor deposition film is directly formed by vapor deposition on one surface of the heat seal layer.

3. The barrier laminate according to claim 1, further comprising the anchor coat layer between the inorganic vapor deposition film and the heat seal layer.

4. The barrier laminate according to claim 3, wherein the inorganic vapor deposition film is directly formed by vapor deposition on one surface of the anchor coat layer.

5. The barrier laminate according to any one of claims 1 to 4, wherein no separation layer is present between the inorganic vapor deposition film and the heat seal layer.

6. The barrier laminate according to any one of claims 1 to 5, wherein the inorganic vapor deposition film contains at least one selected from aluminum, aluminum oxide, and silicon oxide.

**7.** The barrier laminate according to any one of claims 1 to 6, further comprising a print layer on a surface of the substrate opposite the adhesive layer side.

**8.** The barrier laminate according to any one of claims 1 to 7, wherein the adhesive layer has a thickness of 0.5 μm or more and 20 μm or less.

**9.** A method for producing a barrier laminate comprising: a substrate; an adhesive layer; an inorganic vapor deposition film; and a heat seal layer in this order in the thickness direction, the method comprising:

a step of preparing the substrate, wherein the substrate is a resin film, and a step of preparing a transfer film comprising: a support substrate; the heat seal layer; and the inorganic vapor deposition film in this order in a thickness direction, wherein the inorganic vapor deposition film is in contact with the heat seal layer, or the transfer film further includes an anchor coat layer between the inorganic vapor deposition film and the heat seal layer, and the inorganic vapor deposition film is in contact with the anchor coat layer;
a step of producing an intermediate laminate by bonding the substrate and the transfer film together via the adhesive layer with the support substrate of the transfer film facing outward and the inorganic vapor deposition film facing the substrate side; and
a step of separating the support substrate from the heat seal layer of the intermediate laminate.

**10.** The method for producing a barrier laminate according to claim 9, wherein the inorganic vapor deposition film is directly formed by vapor deposition on one surface of the heat seal layer.

**11.** The method for producing a barrier laminate according to claim 9, wherein the transfer film further comprises the anchor coat layer between the inorganic vapor deposition film and the heat seal layer.

**12.** The method for producing a barrier laminate according to claim 11, wherein the inorganic vapor deposition film is directly formed by vapor deposition on one surface of the anchor coat layer.

**13.** The method for producing a barrier laminate according to any one of claims 9 to 12, wherein no separation layer is present between the inorganic vapor deposition film and the heat seal layer.

**14.** The method for producing a barrier laminate according to any one of claims 9 to 13, wherein the inorganic vapor deposition film contains at least one selected from aluminum, aluminum oxide, and silicon oxide.

**15.** The method for producing a barrier laminate according to any one of claims 9 to 14, wherein a print layer is on a surface of the substrate opposite the adhesive layer side.

**16.** The method for producing a barrier laminate according to any one of claims 9 to 15, wherein the adhesive layer has a thickness of 0.5 μm or more and 20 μm or less.

30
40
2
50

FIG. 1

30
32
40
2
50

FIG. 2

10
20
1
30
40

FIG. 3

12
10
20
30
32
40
1

FIG. 4

(A)
10
20
30
40
50
2
(B)
10
20
30
40
50
2
(C)
10
20
30
40
1
50

FIG. 5

1.E+06
1.E+05
1.E+04
1.E+03
1.E+02
1.E+01
1.E+00
Intensity
10
1010
2010
Etching Time (s)
CN
NO2
SiO2

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4622201 B